(19) Europäisches Patentamt
European Patent Office
Office européen des brevets

(11) **EP 2 993 774 A1**

(12) **EUROPÄISCHE PATENTANMELDUNG**

(43) Veröffentlichungstag:
**09.03.2016 Patentblatt 2016/10**

(51) Int Cl.:
***H02M 5/293*** (2006.01)   *H02M 5/297* (2006.01)
***H02M 1/42*** (2007.01)

(21) Anmeldenummer: **14183804.5**

(22) Anmeldetag: **05.09.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **AEG Power Solutions GmbH**
**59581 Warstein-Belecke (DE)**

(72) Erfinder: **Cao, Zhiyu**
**33100 Paderborn (DE)**

(74) Vertreter: **Graefe, Jörg et al**
**Fritz Patent- und Rechtsanwälte**
**Partnerschaft mbB**
**Postfach 1580**
**59705 Arnsberg (DE)**

(54) **Umrichterstufe zum Umrichten von Mehrphasenwechselstrom in Einphasenwechselstrom und umgekehrt und Verfahren zum Betreiben dieser Umrichterstufe**

(57) Die Erfindung betrifft Frequenzumrichterstufe zum Transportieren elektrischer Energie von einer n-Phasenwechselstromseite zu einer Einphasenwechselstromseite bei einer Erhöhung der Frequenz der die Energie transportierenden Ströme

- mit n-Außenleiteranschlüssen (uU, uV, uW) auf der n-Phasenwechselstromseite und mit einem ersten Anschluss (A) und einem zweiten Anschluss (B) der Einphasenwechselstromseite, mit einer Brückenschaltung mit n Zweigen (1, 2, 3) und mit einer Steuerung,
- wobei jeder Zweig (1, 2, 3) eine erste Stromrichterschaltung (S1, S3, S5) und eine zweite Stromrichterschaltung (S2, S4, S6) aufweist, wobei jede Stromrichterschaltung einen ersten Anschluss und einen zweiten Anschluss aufweist,
- wobei in jedem Zweig (1, 2, 3) der zweite Anschluss der ersten Stromrichterschaltung (S1, S3, S5) und der erste Anschluss der zweiten Stromrichterschaltung (S2, S4, S6) in einem Mittelpunkt des Zweigs miteinander verbunden sind,
- wobei jeder Mittelpunkt eines Zweigs der Brückenschaltung mit genau einem Außenleiteranschluss (uU, uV, uW) der n-Phasenwechselstromseite verbunden ist und umgekehrt,
- wobei die ersten Anschlüsse der ersten Stromrichterschaltungen (S1, S3, S5) der Zweige (1, 2, 3) mit einem ersten Anschluss (A) der Einphasenwechselstromseite verbunden sind,
- wobei die zweiten Anschlüsse der zweiten Stromrichterschaltungen (S2, S4, S6) der Zweige (1, 2, 3) mit einem zweiten Anschluss (B) der Einphasenwechselstromseite verbunden sind und
- wobei jede Stromrichterschaltung (S1, S2, S3, S4, S5, S6) eine antiserielle Schaltung von Stromrichterventilen aufweist, und die Stromrichterventile eine in Rückwärtsrichtung leitende Diode aufweisen oder eine in Rückwärtsrichtung der Stromrichterventile leitende Freilaufdiode parallel zu jedem Stromrichterventil geschaltet ist,
- wobei die Steuerung im Betrieb der Frequenzumrichterstufe die Stromrichterventile so ansteuert, dass Strom zwischen den ersten Stromrichterschaltungen (S1, S3, S5) und Strom zwischen den zweiten Stromrichterschaltungen (S2, S4, S6) kommutiert, wobei die Steuerung im Betrieb der Frequenzumrichterstufe zumindest während der Kommutierung des Stroms zwischen den Stromrichterschaltungen (S1, S2, S3, S4, S5, S6) jede stromabgebende und jede stromübernehmende Stromrichterschaltung (S1, S2, S3, S4, S5, S6) zum unidirektionalen Betrieb ansteuert, wobei unidirektional bedeutet, dass nur eines der Stromrichterventile der Stromrichterschaltung (S1, S2, S3, S4, S5, S6) leitet, während das andere Stromrichterventil sperrt.

(Forts. nächste Seite)

EP 2 993 774 A1

Fig. 8a

Fig. 8b

Fig. 8c

Fig. 8d

Fig. 8e

(S5e)

$[t_4+t_{d3}, t_5]$

(S5e-1)

$[t_5, t_5+t_{d1}]$

(S5e-2)

$[t_5+t_{d1}, t_5+t_{d2}]$

(S5e-3)

$[t_5+t_{d2}, t_5+t_{d3}]$

Fig. 8f

(S5f)

$[t_5+t_{d3}, t_6]$

Anti-series MOSFETs operate as synchronous rectifier

(S5f-1)

$[t_6, t_6+t_{d1}]$

(S5f-2)

$[t_6+t_{d1}, t_6+t_{d2}]$

(S5f-3)

$[t_6+t_{d2}, t_6+t_{d3}]$

Change to unidirectional current conduction state for stressless and robust commutation

3

**Beschreibung**

Die vorliegende Erfindung betrifft eine Umrichterstufe zum Umrichten von Mehrphasenwechselstrom in Einphasenwechselstrom und umgekehrt und ein Verfahren zum Betreiben dieser Umrichterstufe.

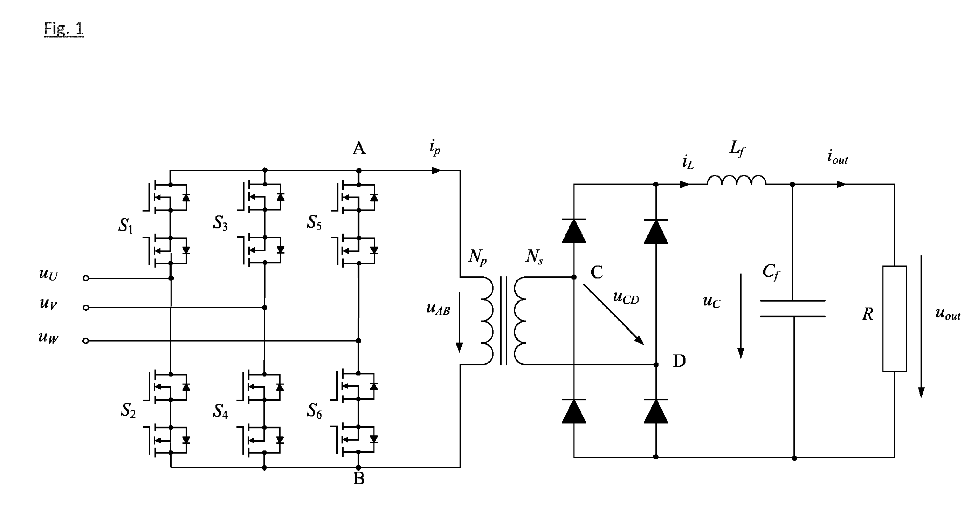

Eine bekannte Frequenzumrichterstufe zum Transportieren elektrischer Energie von einer 3-Phasenwechselstromseite zu einer Einphasenwechselstromseite bei einer Erhöhung der Frequenz der die Energie transportierenden Ströme ist anhand der Figuren 1 bis 6 als Teil eines mehrstufigen Gleichrichters dargestellt. Es zeigt

Fig. 1      ein Ersatzschaltbild eines mehrstufigen Gleichrichters,

Fig. 2a      den Verlauf von Spannungen zwischen Außenleitern und einem Neutralleiter des mehrstufigen Gleichrichters (Sternspannungen),

Fig. 2b      den Verlauf der Beträge der Sternspannungen,

Fig. 3a      eine vergrößerte Darstellung der Sternspannungen in einem Sektor 3,

Fig. 3b      eine vergrößerte Darstellung der Beträge der Sternspannungen im Sektor 3,

Fig. 3c      einen Verlauf einer Spannung UAB am Ausgang der Frequenzumrichterstufe über eine Periode im Sektor 3 nebst weiterer elektrischer Größen im mehrstufigen Gleichrichter,

Fig. 4      Schaltzustände der Frequenzumrichterstufe im Sektor 3 nach dem Stand der Technik,

Fig. 5a      eine vergrößerte Darstellung der Sternspannungen in einem Sektor 5,

Fig. 5b      eine vergrößerte Darstellung der Beträge der Sternspannungen im Sektor 5,

Fig. 5c      einen Verlauf einer Spannung UAB am Ausgang der Frequenzumrichterstufe über eine Periode im Sektor 5 nebst weiterer elektrischer Größen im mehrstufigen Gleichrichter,

Fig. 6      Schaltzustände der Frequenzumrichterstufe im Sektor 5 nach dem Stand der Technik.

Vom mehrstufigen Gleichrichter ist in Fig. 1 nur der Leistungsteil dargestellt. Eine Steuerung des mehrstufigen Gleichrichters ist nicht dargestellt.

Die Frequenzumrichterstufe weist drei Außenleiteranschlüsse uU, uV, uW auf der 3-Phasenwechselstromseite, einen ersten Anschluss A und einen zweiten Anschluss B auf der Einphasenwechselstromseite und eine Brückenschaltung B2C mit 3 Zweigen und mit einer Steuerung auf. Im Übrigen ist sie wie folgt gestaltet:

-      Jeder Zweig der Brückenschaltung B2C weist eine erste Stromrichterschaltung S1, S3, S5 und eine zweite Stromrichterschaltung S2, S4, S6 auf, wobei jede Stromrichterschaltung S1 bis S6 einen ersten Anschluss und einen zweiten Anschluss hat.
-      In jedem Zweig sind der zweite Anschluss der ersten Stromrichterschaltung S1, S3, S5 und der ersten Anschluss der zweiten Stromrichterschaltung S2, S4, S6 in einem Mittelpunkt des Zweigs miteinander verbunden.
-      Jeder Mittelpunkt eines Zweigs der Brückenschaltung B2C ist mit genau einem Außenleiteranschluss uU, uV, uW der 3-Phasenwechselstromseite verbunden und umgekehrt.
-      Die ersten Anschlüsse der ersten Stromrichterschaltungen S1, S3, S5 der Zweige sind mit einem ersten Anschluss A der Einphasenwechselstromseite verbunden.
-      Die zweiten Anschlüsse der zweiten Stromrichterschaltungen S2, S4, S6 der Zweige sind mit einem zweiten Anschluss B der Einphasenwechselstromseite verbunden.
-      Jede Stromrichterschaltung S1 bis S6 weist eine antiserielle Schaltung von Stromrichterventilen auf und die Stromrichterventile weisen eine in Rückwärtsrichtung leitende Diode auf oder es ist eine in Rückwärtsrichtung der Stromrichterventile leitende Freilaufdiode parallel zu jedem Stromrichterventil geschaltet.
-      Die Steuerung steuert im Betrieb der Frequenzumrichterstufe die Stromrichterventile so an, dass Strom zwischen den Stromrichterschaltungen kom mutiert.

Ein Neutralleiteranschluss ist in Fig. 1 nicht dargestellt. Da die Außenleiter symmetrisch belastet sind, ist ein Neutralleiteranschluss auch nicht notwendig.

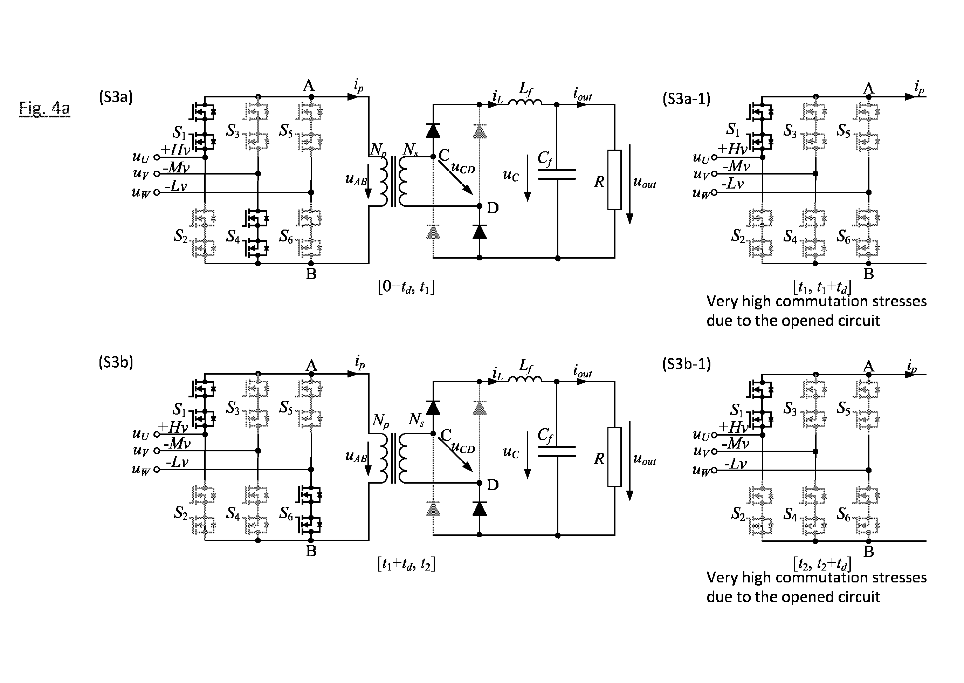

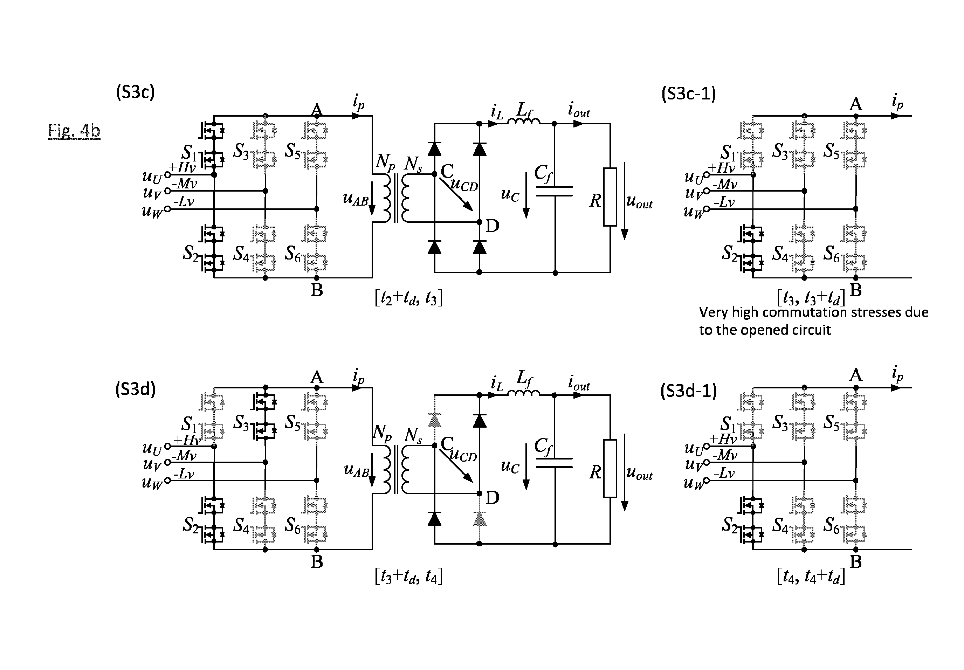

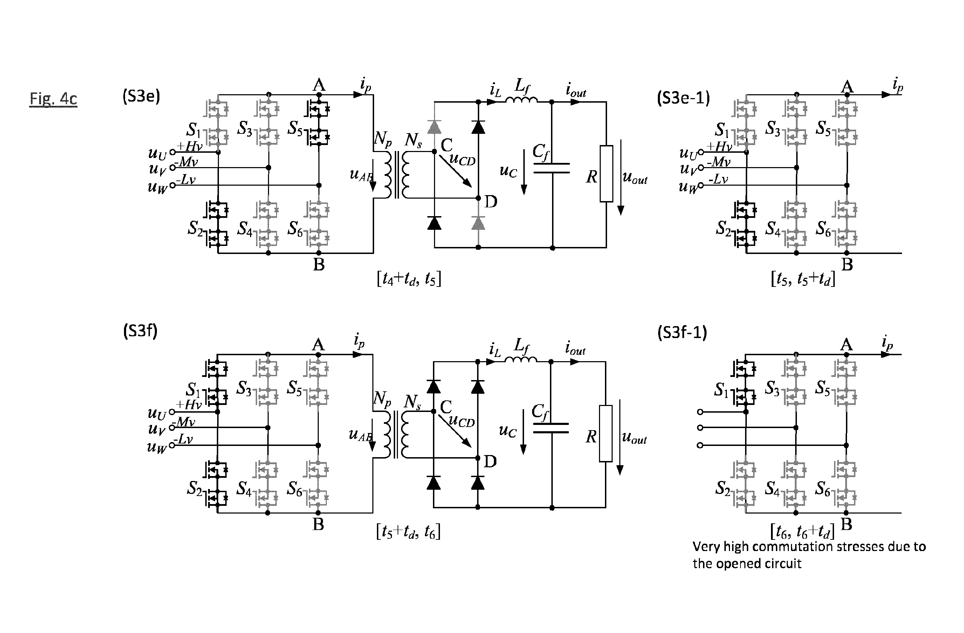

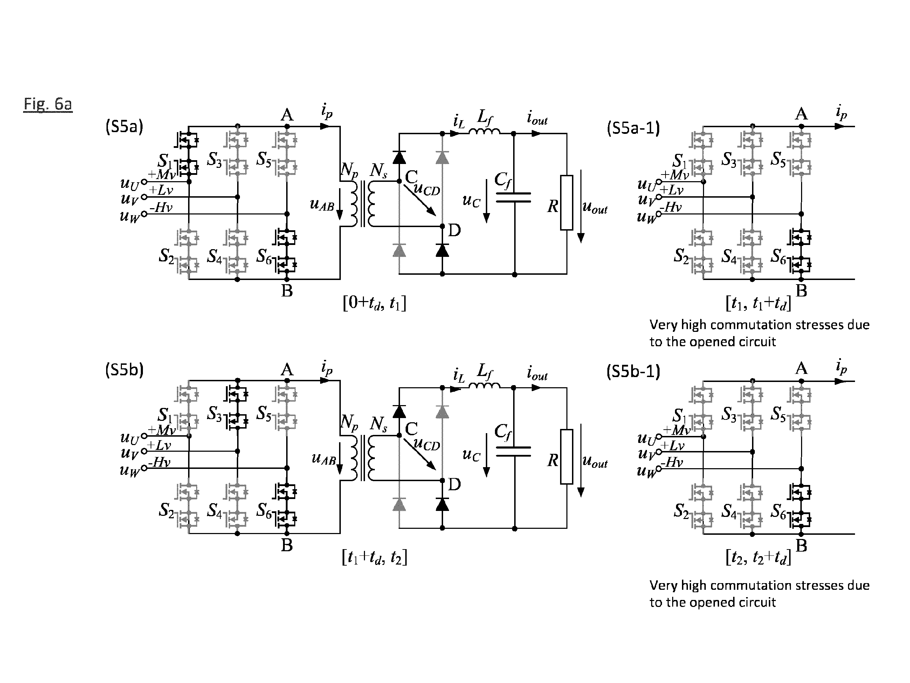

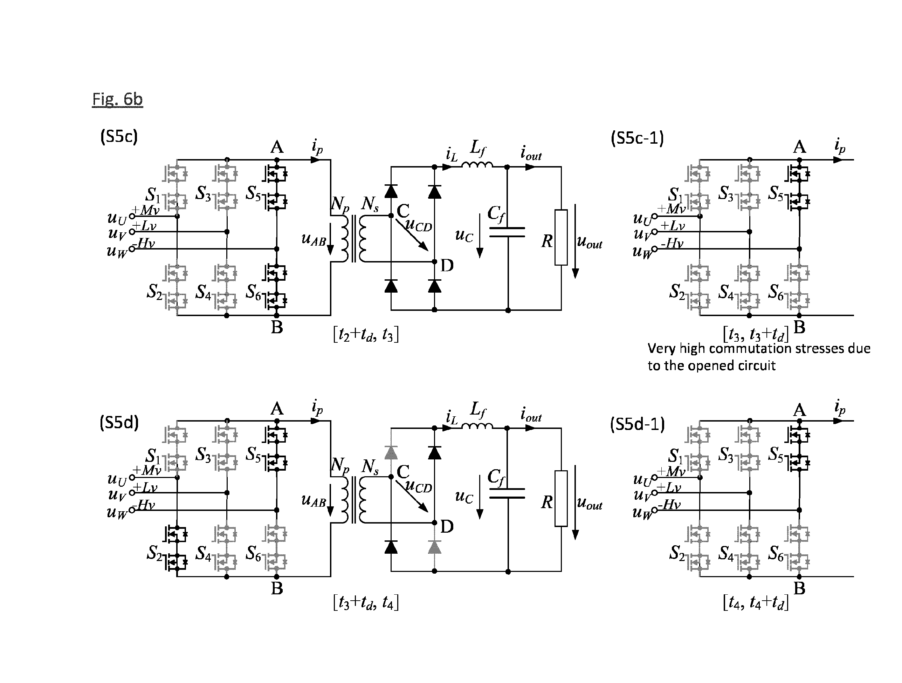

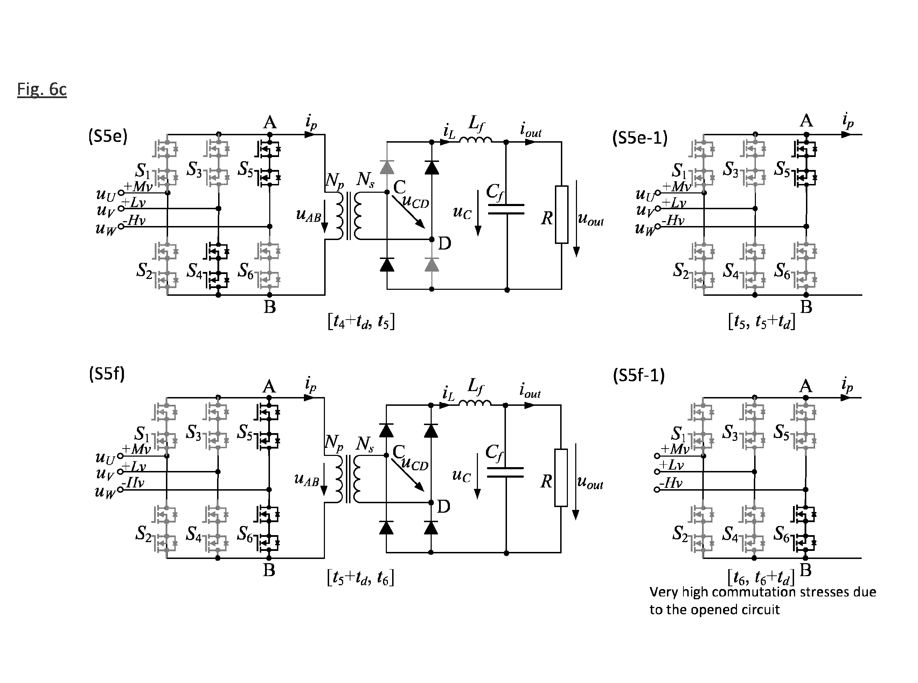

Bei dem Beispiel aus Fig. 1 und im weiteren in den Fig. 4 und 6 sind MOS-FETs als Stromrichterventile dargestellt. Es können aber auch IGBT oder andere steuerbare Halbleiterschalter als Stromrichterventile verwendet werden.

Der Ausgangsstrom der Frequenzumrichterstufe ist mit iP bezeichnet. Der Strom hat eine Frequenz, die größer, insbesondere sehr viel größer ist als die Grundfrequenz der Spannung auf der 3-Phasenwechselstromseite der Frequenzumrichterstufe.

Die Transformatorstufe wird durch einen Mittelfrequenztransformator T mit einem Übersetzungsverhältnis Np/Ns gebildet. Der Primärstrom des Transformators ist der Ausgangsstrom iP der Frequenzumrichterstufe. Der Transformator dient insbesondere einer galvanischen Trennung der Wechselstromseite von der Gleichstromseite und umgekehrt. Er hat die Eingangsspannung uAB und eine Ausgangspannung uCD.

An die Transformatorstufe schließt sich eine ungesteuerte B2-Diodenbrücke mit der Eingangsspannung uCD als Gleichrichter an. Die Eingangsspannung uCD enspricht der Sekundärspannung des Mittelfrequenztransformators T. Anstelle der B2-Brücke könnte auch ein anderer Gleichrichter, insbesondere Gleichrichter mit anderer Topologie verwendet werden.

Der Gleichrichterstufe ist eine Filterstufe aus einer Drossel Lf und einem Kondensator Cf in bekannter Tiefpassschaltung nachgeschaltet. Die B2-Brücke und die Drossel Lf werden vom Strom iL durchflossen. Am Kondensator fällt die Spannung uC ab.

Parallel zu dem Kondensator Cf liegt der Ausgang des Gleichrichters, an dem im Beispiel die Last R angeschlossen ist und an dem die Spannung uout abfällt, die der Kondensatorspannung uC entspricht. Der Laststrom ist mit iout bezeichnet.

Die nicht dargestellte Steuerung steuert die Brückenschaltung B2C der Frequenzumrichterstufe so, dass diese mittels Pulsweitenmodulation die einphasige Wechselspannung uAB erzeugt.

Die Stromrichterventile S1 bis S6 der Brückenschaltung B2C werden dazu mit Schaltfrequenzen von bis zu einigen 10kHz betrieben.

Das bekannte Konzept zum Betreiben von Frequenzumrichterstufen basiert auf der Kenntnis, dass 3-Phasenwechselstromnetze eine gleichbleibende Leistung zur Verfügung stellen können, wodurch stets die gleiche konstante Leistung von dem Netz zur Ausgangseite der Frequenzumrichterstufe übertragen werden kann.

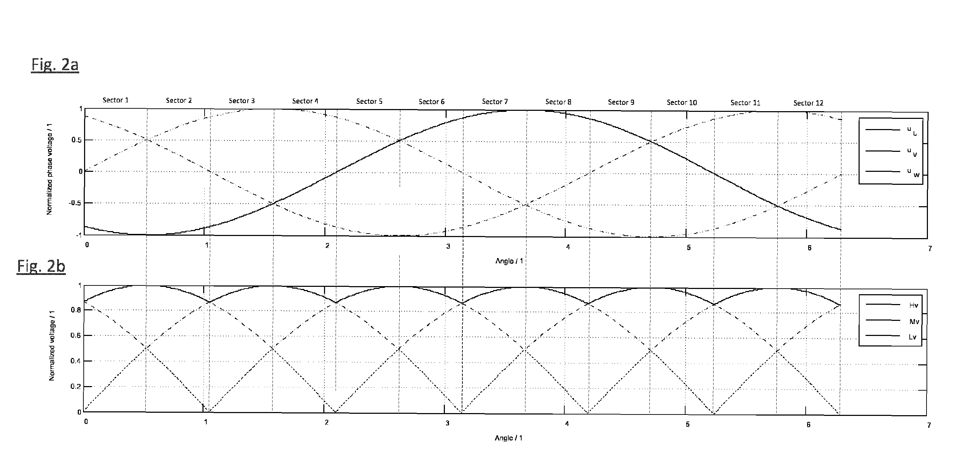

In Figur 2a sind die normierten Spannungen uU, uV, uW dargestellt. Der höchste Betrag Hv, der mittlere Betrag Mv und der niedrigste Betrag Lv der normalisierten Spannungen ist in der Figur 2b dargestellt.

In dem in den Figuren 2a und 2b mit Sektor 3 bezeichneten Bereich gilt beispielsweise für die Beträge Hv, Mv und Lv:

$$Hv = uU$$

$$Mv = -uV$$

$$Lv = -uW$$

Wie man in den Figuren 2a und 2b erkennen kann, hat im Sektor 3 die positive Spannung uU den größten Betrag. Die Beträge von uV und uW sind kleiner. Außerdem sind es negative Spannungen. Sektoren, in denen gilt, dass die betragsmäßig höchste Spannung positiv ist, werden im folgenden mit PHVS bezeichnet (PVHS steht für *positive highest voltage sector*).

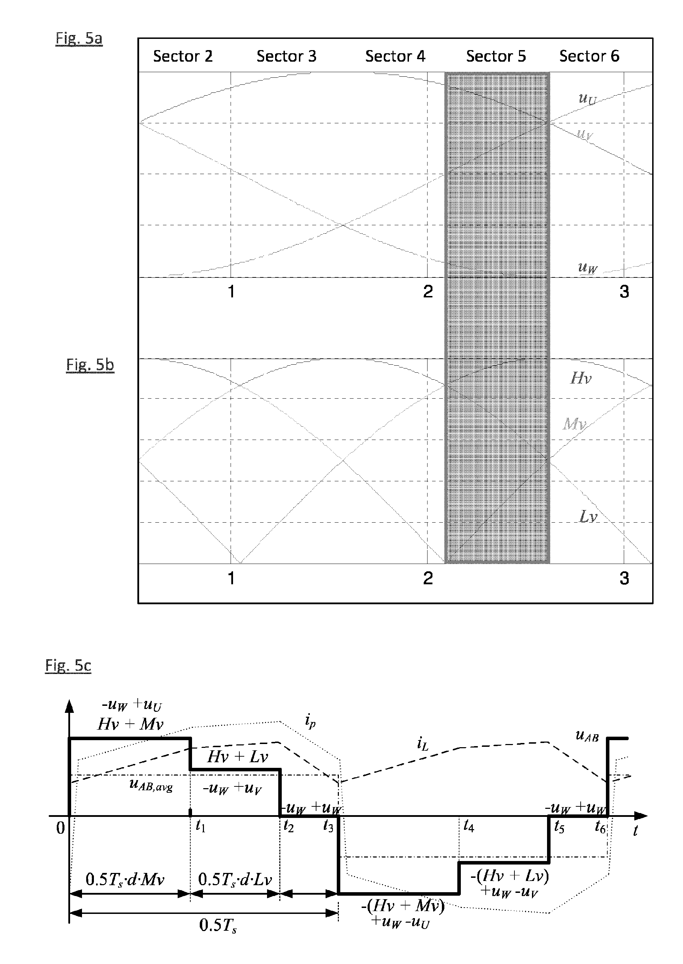

In dem in den Figuren 5a und 5b mit Sektor 5 bezeichneten Bereich gilt beispielsweise für die Beträge Hv, Mv und Lv:

$$Hv = -uW$$

$$Mv = uU$$

$$Lv = uV$$

Wie man in den Figuren 5a und 5b erkennen kann, hat die negative Spannung uW den größten Betrag. Die Beträge von uU und uV sind kleiner. Sektoren, in denen gilt, dass die betragsmäßig höchste Spannung negativ ist, werden im Folgenden mit NHVS bezeichnet (NVHS steht für *negative highest voltage sector).*

Eine Periode der Spannungen uU, uV, uW lässt sich in 12 derartige Sektoren zu je 60° unterteilen. Der dritte und der fünfte Sektor werden nachfolgend beispielhaft genauer betrachtet. Die dadurch gewonnenen Erkenntnisse können dann auf die anderen Sektoren übertragen werden, denn jeder Sektor ist entweder ein PHVS oder ein NHVS.

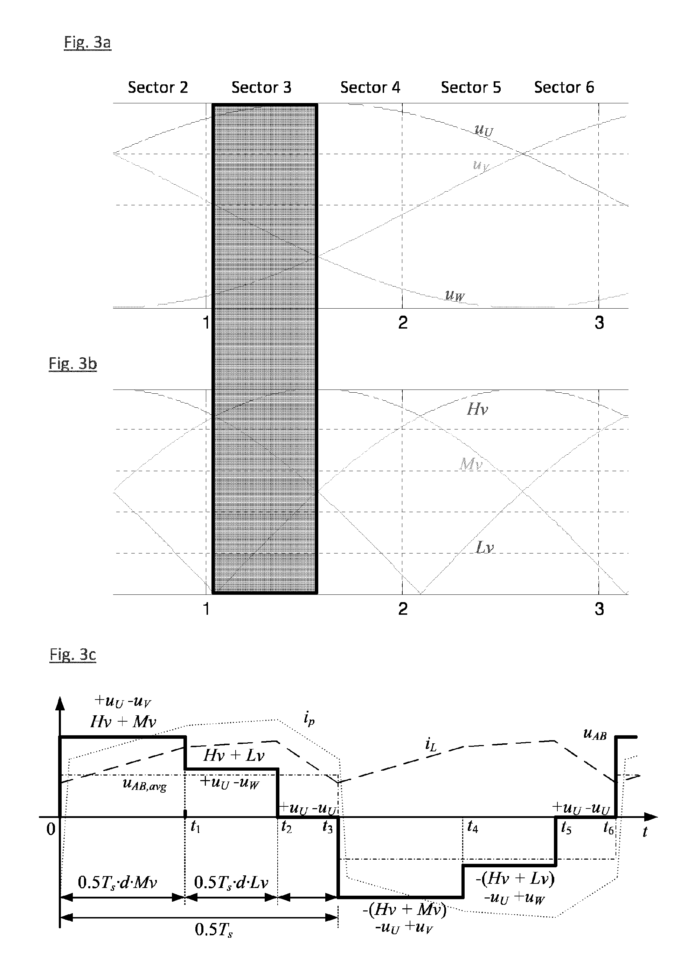

Während aller Sektoren werden durch Ansteuerung der Stromrichterschaltungen S1 bis S6 Spannungen mit den Beträgen Hv, Mv und Lv auf den Ausgang der Brückenschaltung durchgeschaltet. Dadurch kann am Ausgang der Brückenschaltung die Spannung UAB erzeugt werden. Durch Modulation, insbesondere durch Pulsweitenmodulation wird die in den Figuren 3c und 5c über eine Periode der Spannung uAB dargestellte Spannung uAB erzeugt.

Wenn man die Einschaltzeiten der Spannungen mit den Beträgen Hv, Mv und Lv

$$dMv = d * Mv$$

$$dLv = d *Lv$$

proportional zu einem Tastgrad (duty cycle) d und den Beträgen der normalisierten Phasenspannungen Hv, Mv und Lv wählt, erhält man im Mittel über eine halbe Periode eine mittlere Spannung uAB,ave mit dem Betrag

$$|uAB,ave|=dMv(Hv+Mv)+dLv(Hv+Lv)$$

am Ausgang der Brückenschaltung.

Da die Leistung der dreiphasigen Spannungsversorgung der Brückenschaltung konstant ist, gilt:

$$uU^2+uV^2+uW^2=1,5 \Leftrightarrow Hv^2+Mv^2+Lv^2=1,5.$$

Im Dreiphasennetz gilt ferner:

$$uU+uV+uW=0 \Leftrightarrow Hv=Mv+Lv.$$

Dadurch ergibt sich:

$$|uAB,ave|=dMv(Hv+Mv)+DLv(Hv+Lv)=1,5d.$$

Die durchschnittliche Ausgangsspannung der Brückenschaltung, d.h. der Frequenzumrichterstufe und damit die Eingangsspannung der Transformatorstufe hat einen konstanten Betrag.

Nach Transformierung durch die Transformatorstufe und Gleichrichtung ergibt sich dann am Ausgang des mehrstufigen Gleichrichters eine auf die Eingangsspannungen der Umrichterstufe normierte konstante Ausgangsspannung

$$Uout=1,5*d*n,$$

wobei n=Ns:Np das Übersetzungsverhältnis des Transformators ist.

Im Weiteren werden nun die in den Fig. 3b und 5b als Beispiel dargestellten Spannungs- und Stromverläufe über einer Periode der Ausgangsspannung uAB der Brückenschaltung und die für die Erzeugung dieser Verläufe notwendigen Schaltvorgänge erläutert, die mittels der Steuerung und der Stromrichterschaltungen S1 bis S6 erfolgen. Dazu sind die in den Fig. 3b und 5b dargestellten Perioden der Spannung uAB in sechs Intervalle [0, t1], [t1, t2], [t2, t3], [t3, t4], [t4, t5], [t5, t6] unterteilt. In diesen sechs Intervallen werden durch die Brückenschaltung sechs Hauptschaltzustände S3a, S3b, ..., S3f für den Sektor 3 und S5a, S5b, ..., S5f für den Sektor 5 eingenommen. Diese Hauptschaltzustände sind in der Figur 4 für den Sektor 3 und in der Figur 6 für den Sektor 5 dargestellt.

Zwischen diesen Hauptschaltzuständen S3a, S3b, ..., S3f bzw. S5a, S5b, ..., S5f nehmen die Stromrichterschaltungen S1 bis S6 Übergangsschaltzustände S3a-1, S3b-1, ..., S3f-1 bzw. S5a-1, S5b-1, ..., S5f-1 ein, die für eine sichere Kommutierung von Strömen von einer stromabgebenden Stromrichterschaltung S1 bis S6 zu einer stromübernehmenden Stromrichterschaltung S1 bis S6 notwendig sind. Diese Übergangsschaltzustände S3a-1, S3b-1, ..., S3f-1 bzw. S5a-1, S5b-1, ..., S5f-1 dauern nur sehr kurz. Die dafür notwendigen Zeiten werden, ohne dass sie für die verschiedenen Übergangsschaltzustände S3a-1, S3b-1, ..., S3f-1 bzw. S5a-1, S5b-1, ..., S5f-1 genauer differenziert werden, mit td bezeichnet. Die Zeitintervalle, in denen die Übergangsschaltzustände S3a-1, S3b-1, ..., S3f-1 bzw. S5a-1, S5b-1, ..., S5f-1 eingenommen werden, sind in den Figuren 3b und 5b aus Gründen der Übersichtlichkeit nicht dargestellt. Die Übergangsschaltzustände S3a-1, S3b-1, ..., S3f-1 bzw. S5a-1, S5b-1, ..., S5f-1 sind aber in den Figuren 4 und 6 dargestellt.

Die Übergangsschaltzustände S3a-1, S3b-1, ..., S3f-1 bzw. S5a-1, S5b-1, ..., S5f-1 bei einer Lösung nach dem Stand der Technik zeichnen sich dadurch aus, dass die im Hauptschaltzustand stromführenden und stromabgebenden Stromrichterschaltungen S1 bis S6 bei Eintritt eines Überganszustands abgeschaltet werden. Die im nachfolgenden Hauptschaltzustand stromführende und damit stromübernehmende Stromrichterschaltung S1 bis S6 bleibt im Übergangszustand noch abgeschaltet. Diese stromübernehmende Stromrichterschaltung S1 bis S6 wird erst mit Eintritt des auf den Übergangszustand folgenden Hauptschaltzustands eingeschaltet, womit die Kommutierung abgeschlossen ist.

Im Übergangsschaltzustand wird damit der Stromkreis durch die Brückenschaltung unterbrochen. Dass bedeutet, dass alle Energie, die zum Beispiel in parasitären Induktivitäten des Transformators und der Brückenschaltung gespeichert wird, abgeleitet werden muss. Dazu sind bei der Lösung nach dem Stand der Technik parallel zu den Stromrichtern große Snubber-Schaltungen vorgesehen, die in Figur 1 nicht dargestellt sind. Dennoch kommt es zu einer starken Beanspruchung der Stromrichterschaltungen und der Snubber-Schaltungen, zum Beispiel durch sehr große Spannungsveränderungen und Spannungsspitzen. Außerdem haben die Snubber-Schaltungen, die aus einer Reihenschaltung von dem Snubber-Kondensator und einem ohmschen Widerstand aufgebaut sind, Bindleistungen und Wirkleistungsverluste zur Folge, was ebenfalls nachteilig ist.

Vor dem Hintergrund dieser Probleme lag der Erfindung die Aufgabe zugrunde, eine Frequenzumrichterstufe und ein Verfahren zum Betreiben einer Frequenzumrichterstufe vorzuschlagen, die mit sehr kleinen Snubber-Schaltungen auskommen.

Diese Aufgabe wird erfindungsgemäß dadurch gelöst, dass die Steuerung einer erfindungsgemäßen Frequenzumrichterstufe im Betrieb der Frequenzumrichterstufe zumindest während der Kommutierung des Stroms zwischen den Stromrichterschaltungen jede stromabgebende und jede stromübernehmende Stromrichterschaltung zum unidirektionalen Betrieb ansteuert, wobei unidirektional bedeutet, dass nur eines der Stromrichterventile der Stromrichterschaltung leitet, während das andere Stromrichterventil sperrt.

Im Hinblick auf das Verfahren zum Betreiben einer Frequenzumrichterstufe wird die Aufgabe dadurch gelöst, dass bei jeder Kommutierung des Stroms zwischen zwei der genannten Stromrichterschaltungen die stromabgebende und die stromübernehmende Stromrichterschaltung unidirektional betrieben werden.

Durch das unidirektionale Betreiben der stromabgebenden und der stromübernehmenden Stromrichterschaltungen während der Kommutierung, also während der Übergangsschaltzustände, ist es möglich, eine Unterbrechung eines Stromkreises durch die Brückenschaltung der Frequenzumrichterstufe zu verhindern und gleichzeitig einen Kurzschluss zwischen den Außenleiteranschlüsse auf der n-Phasenwechselstromseite einer erfindungsgemäßen Frequenzumrichterstufe zu verhindern. Dadurch können die Snubber-Schaltungen in der aus dem Stand der Technik bekannten Form entfallen oder zumindest mit sehr viel kleineren Bauelementen, insbesondere sehr viel kleineren Kondensatoren auskommen.

Gemäß der Erfindung können die Stromrichterventile insbesondere MOS-Feldeffekttransistoren oder IGBTs sein. Ebenso können andere steuerbare Halbleiterschalter verwendet werden.

Eine erfindungsgemäße Frequenzumrichterstufe kann Teil eines erfindungsgemäßen mehrstufigen Gleichrichters mit einem n-Phasenanschluss, der mit dem n-Phasenanschluss verbundenen Frequenzumrichterstufe, einer mit der Frequenzumrichterstufe verbundenen Transformatorstufe, einer mit der Transformatorstufe verbundenen Gleichrichterstufe und einem mit der Gleichrichterstufe verbundenen Gleichstromanschluss sein.

Bei der Kommutierung zwischen zwei der ersten Stromrichterschaltungen kann bei einem erfindungsgemäßen Verfahren zum Betreiben einer Frequenzumrichterstufe

- in einem ersten Schritt die stromabgebende erste Stromrichterschaltung allein unidirektional betrieben werden,
- in einem zweiten, an den ersten Schritt anschließenden Schritt die stromabgebende und die stromübernehmende erste Stromrichterschaltung zusammen unidirektional betrieben werden und
- in einem dritten, an den zweiten Schritt anschließenden Schritt die stromübernehmende erste Stromrichterschaltung allein unidirektional betrieben werden.

Während der Kommutierung zwischen zwei der ersten Stromrichterschaltungen kann eine der zweiten Stromrichterschaltungen unidirektional betrieben werden.

Bei der Kommutierung zwischen zwei der zweiten Stromrichterschaltungen kann

- in einem ersten Schritt die stromabgebende zweite Stromrichterschaltung allein unidirektional betrieben werden,
- in einem zweiten, an den ersten Schritt anschließenden Schritt die stromabgebende und die stromübernehmende zweite Stromrichterschaltung zusammen unidirektional betrieben werden und
- in einem dritten, an den zweiten Schritt anschließenden Schritt die zweite stromübernehmende Stromrichterschaltung allein unidirektional betrieben werden.

Während der Kommutierung zwischen zwei der zweiten Stromrichterschaltungen kann eine der ersten Stromrichterschaltungen unidirektional betrieben werden.

Jede der stromführenden Stromrichterschaltungen kann zwischen zwei Kommutierungen, also in einem Hauptschaltzustand bidirektional betrieben werden, wobei bidirektional bedeutet, dass beide Stromrichterventile der Stromrichterschaltungen leiten. Der bidirektionale Betrieb der stromführenden Stromrichterschaltungen in den Hauptschaltzuständen ist insbesondere dann vorteilhaft, wenn es sich bei den Stromrichterventilen um MOST-FETs handelt.

Jede der stromführenden Stromrichterschaltungen kann zwischen zwei Kommutierungen, also in einem Hauptschaltzustand nur dann bidirektional betrieben werden, wenn zwischen zwei Kommutierungen ein über die Anschlüsse der Einphasenwechselstromseite fließender Strom einen Nulldurchgang hat, während im übrigen nach einer Kommutierung, also in einem Hauptschaltzustand der unidirektionale Betrieb der ersten und der zweiten stromführenden Stromrichterschaltung aus dem dritten Kommutierungsschritt bis zum zweiten Schritt der nächsten Kommutierung beibehalten wird. Das ist insbesondere möglich, wenn es sich bei den Stromrichterventilen um IGBTs handelt.

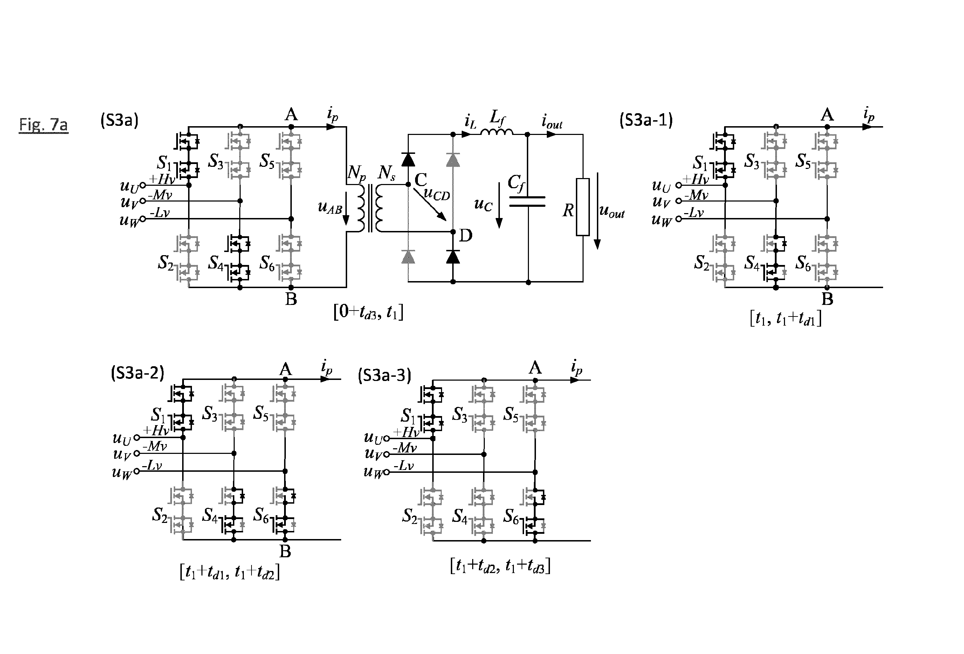

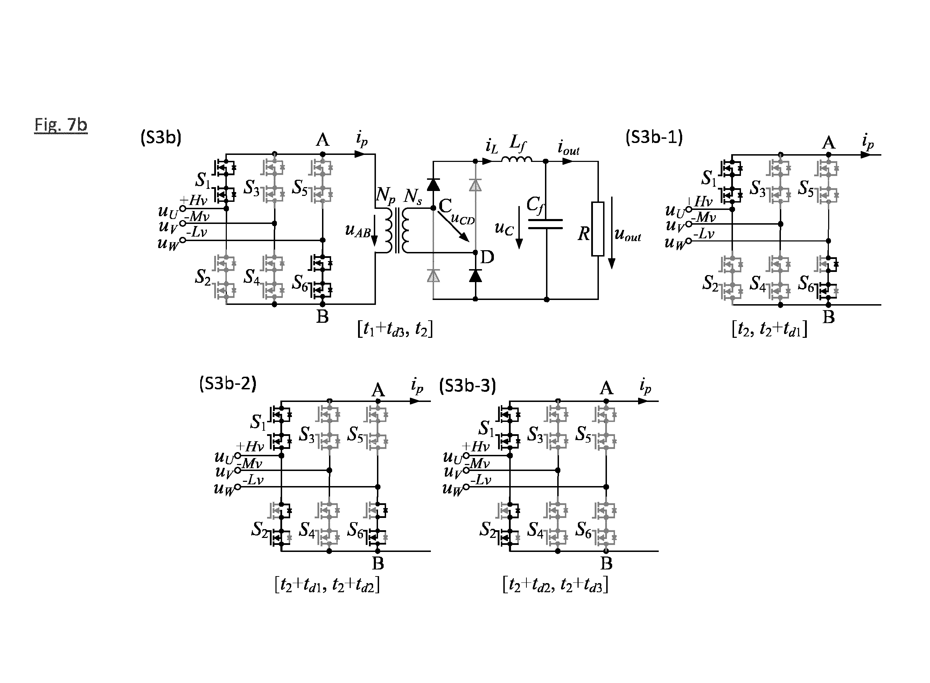

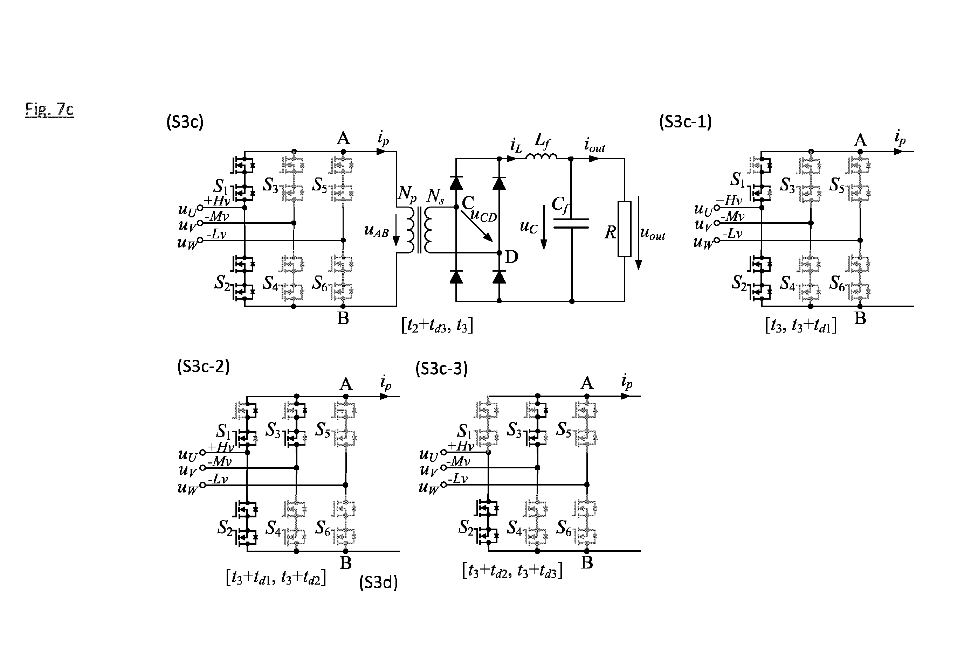

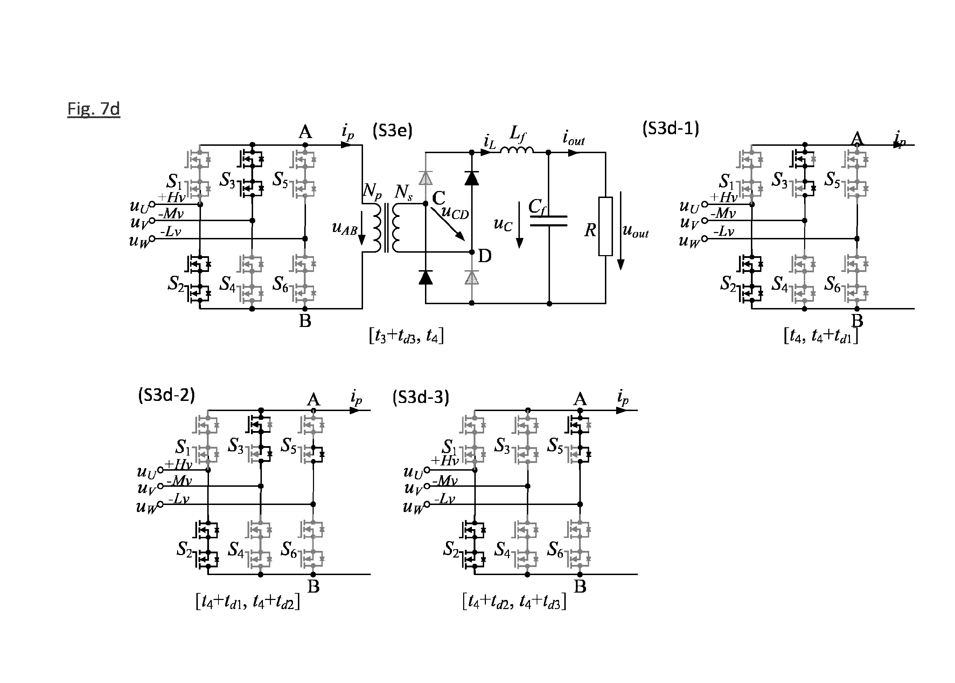

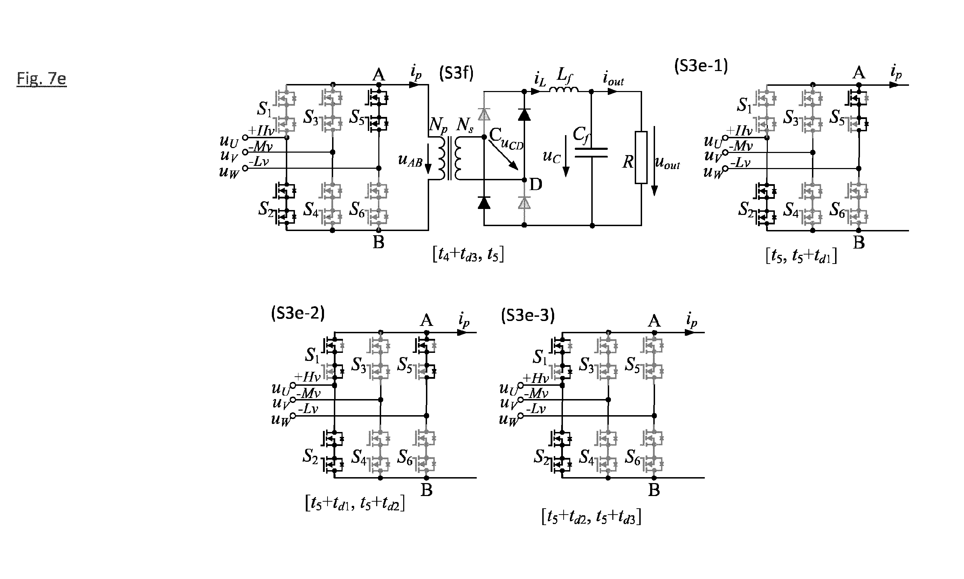

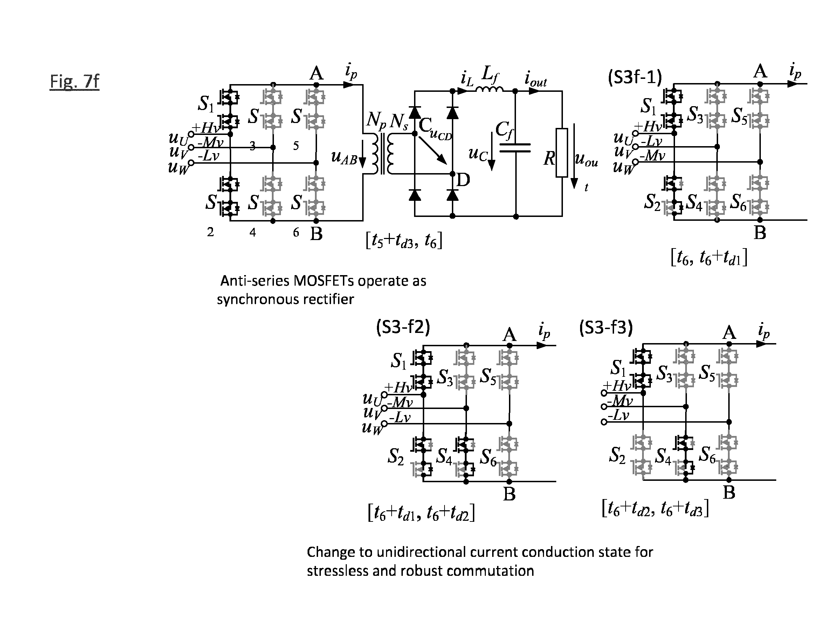

Weitere Merkmale und Vorteile der vorliegenden Erfindung werden deutlich anhand der nachfolgenden Beschreibung bevorzugter Ausführungsbeispiele unter Bezugnahme auf die beiliegenden Figuren 7 bis 14. Darin zeigen:

Fig. 7    Schaltzustände bei einem erfindungsgemäßen Betriebsverfahren einer ersten erfindungsgemäßen Frequenzumformerstufe im Sektor 3,

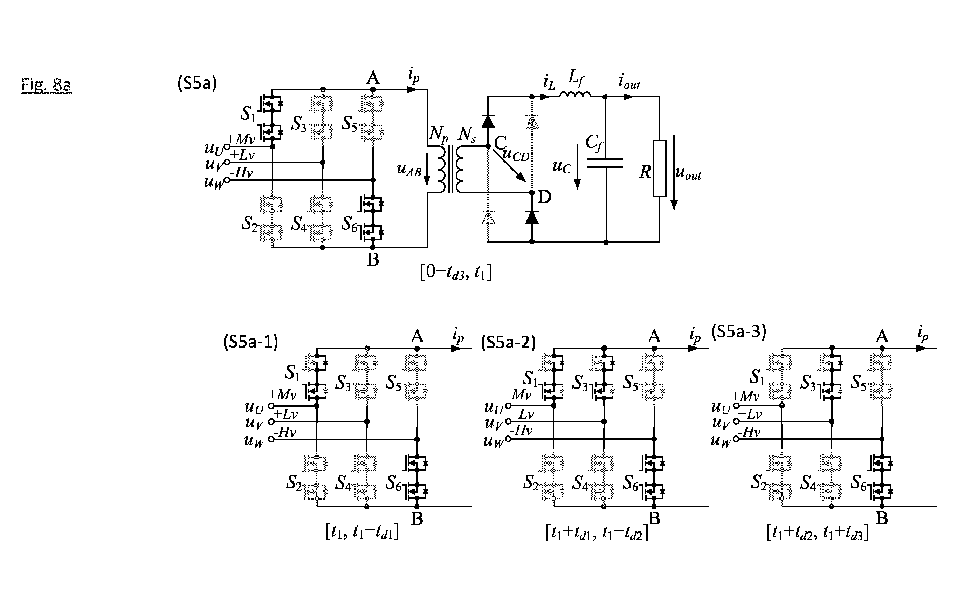

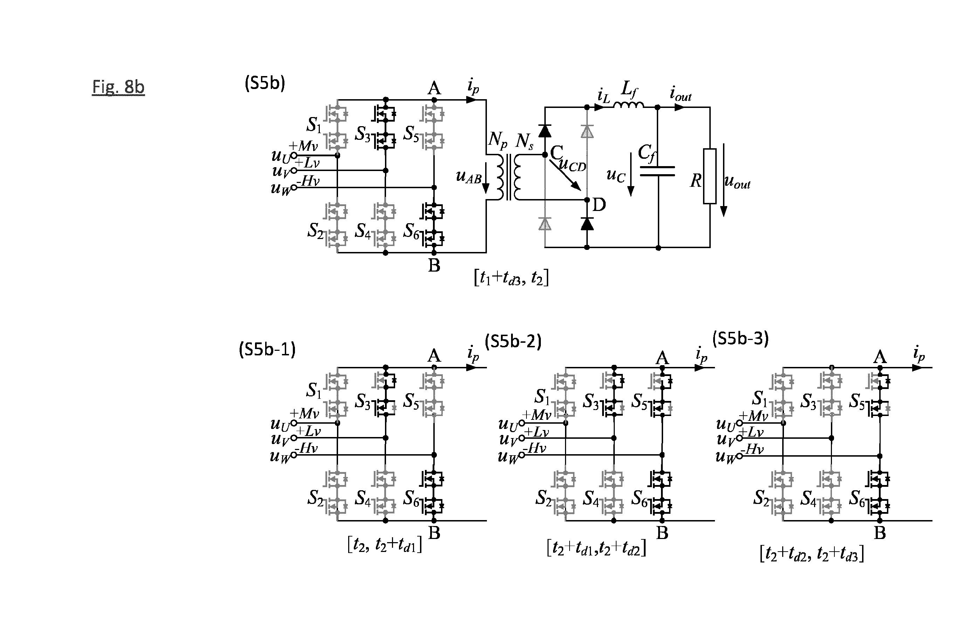

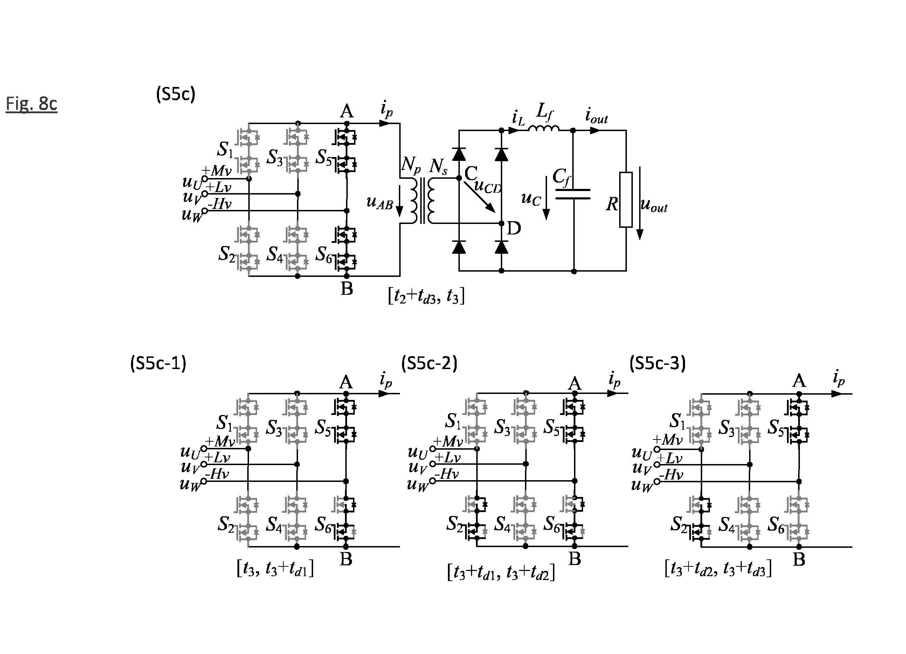

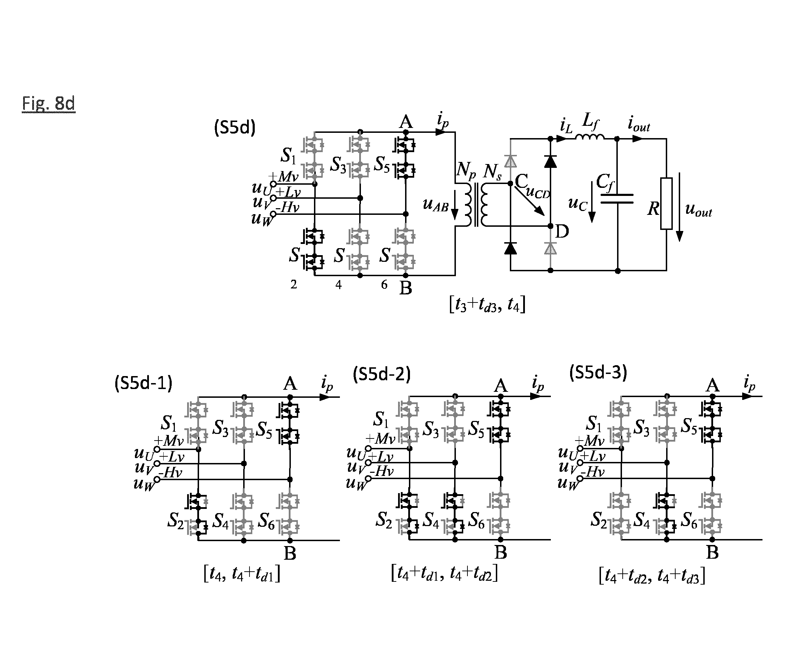

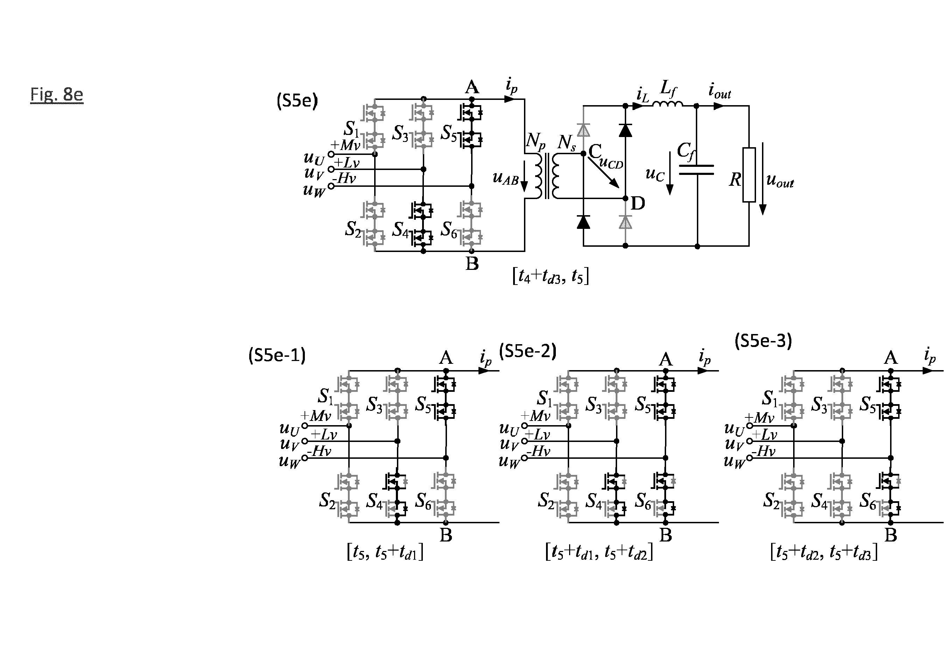

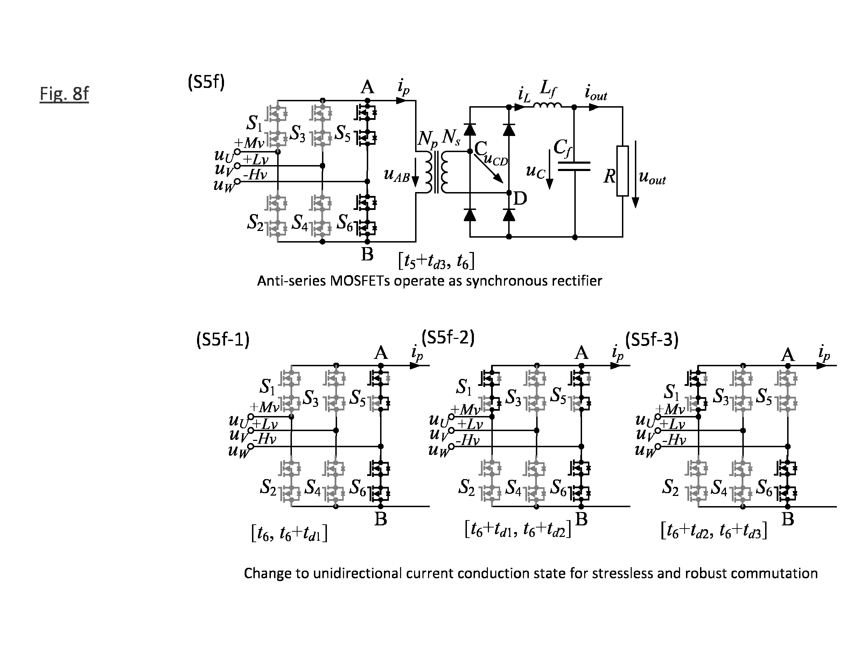

Fig. 8    Schaltzustände bei einem erfindungsgemäßen Betriebsverfahren einer ersten erfindungsgemäßen Frequenzumformerstufe im Sektor 5,

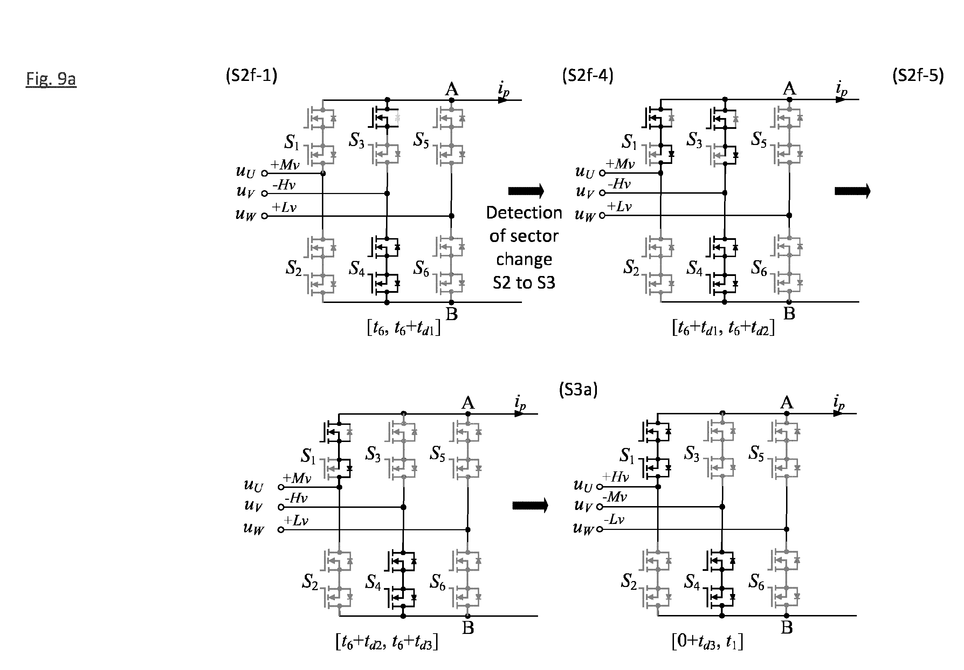

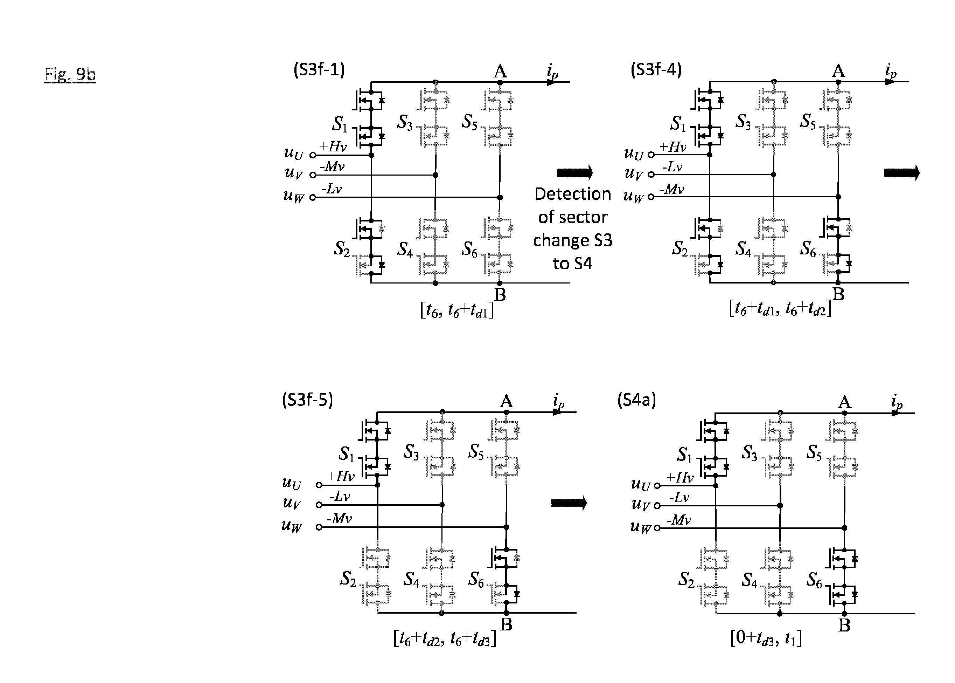

Fig. 9    Schaltzustände bei einem erfindungsgemäßen Betriebsverfahren einer ersten erfindungsgemäßen Frequenzumformerstufe bei Übergang vom Sektor 2 in den Sektor 3 und vom Sektor 3 in den Sektor 4,

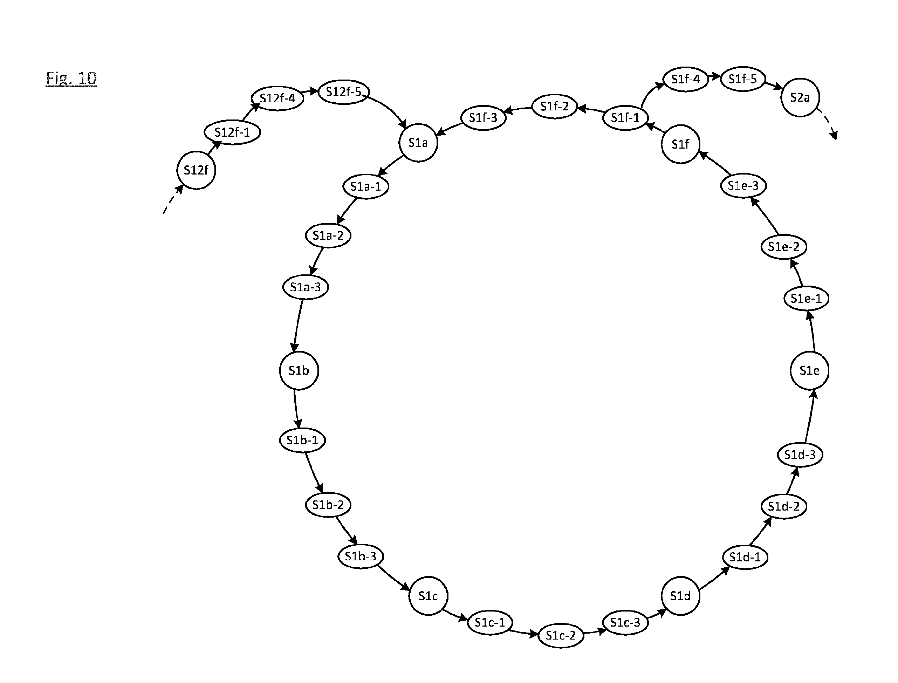

Fig. 10    einen Teil des erfindungsgemäßen Betriebsverfahrens einer ersten erfindungsgemäßen Frequenzumformerstufe in der Darstellung einer vereinfachten Zustandsmaschine,

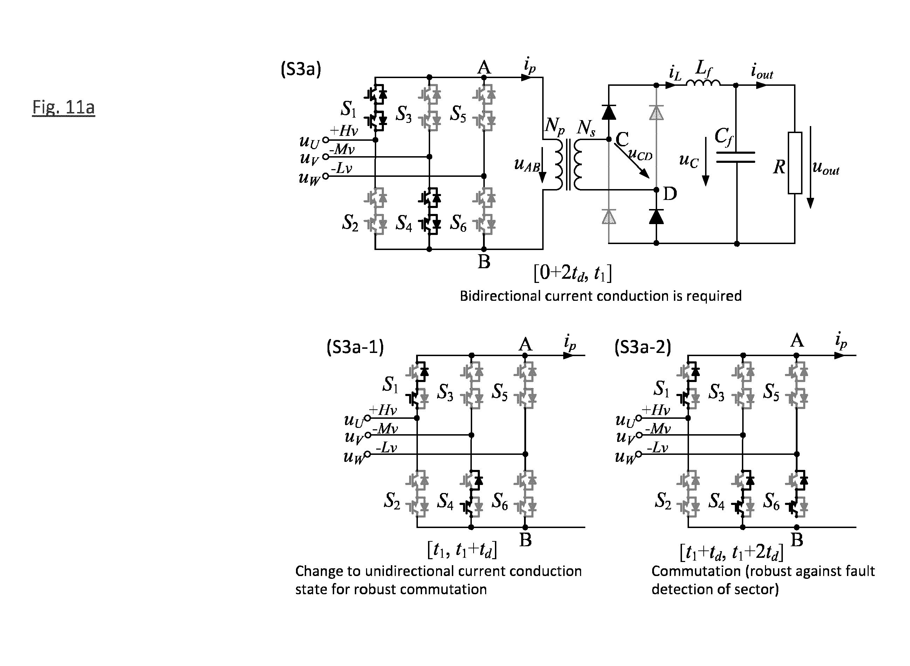

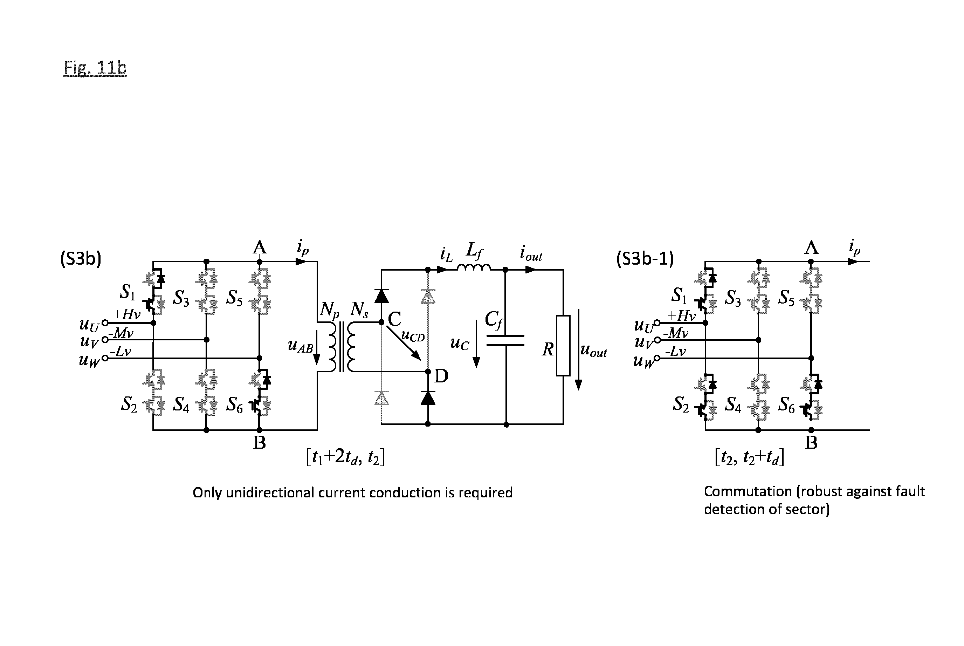

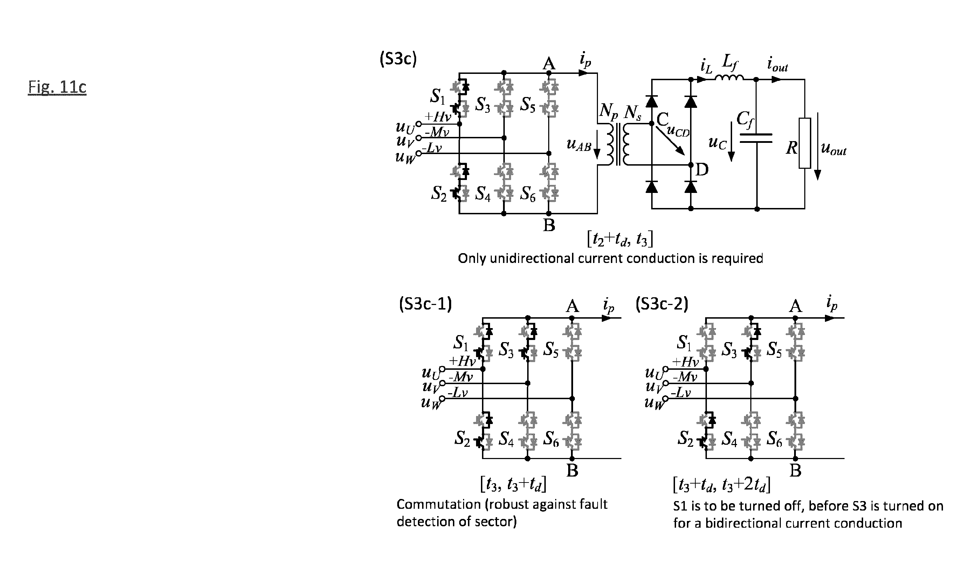

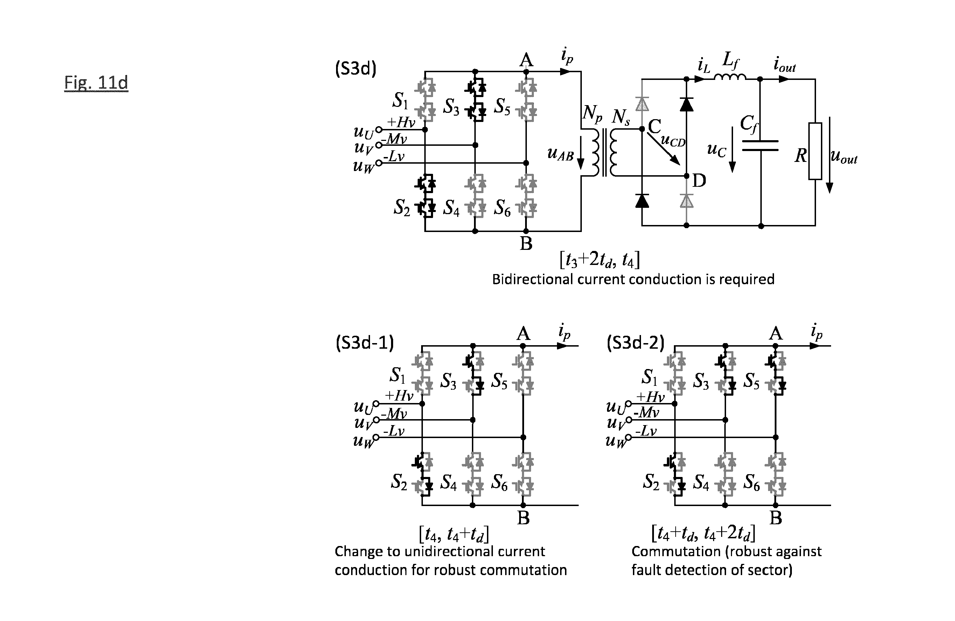

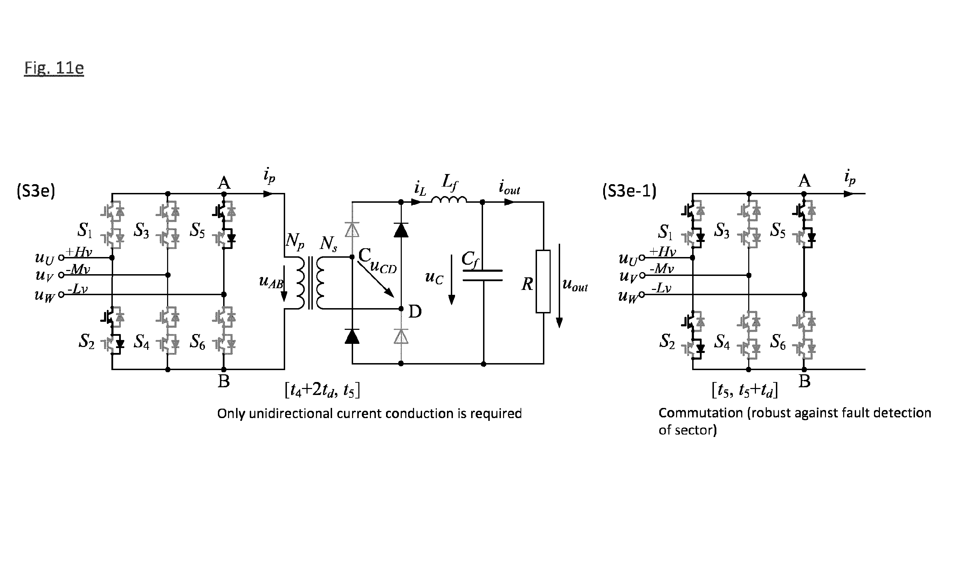

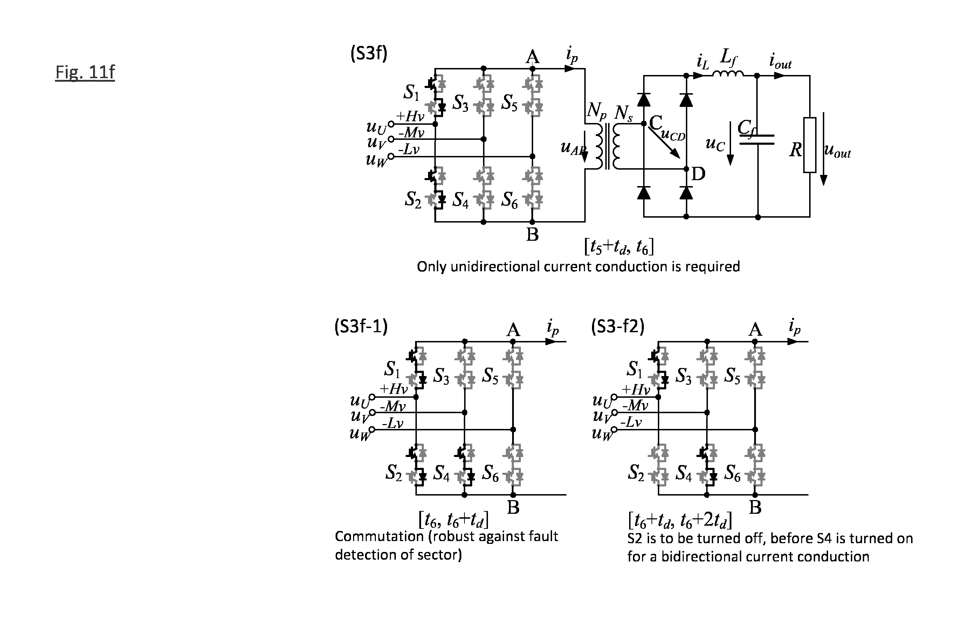

Fig. 11    Schaltzustände bei einem erfindungsgemäßen Betriebsverfahren einer zweiten erfindungsgemäßen Frequenzumformerstufe im Sektor 3,

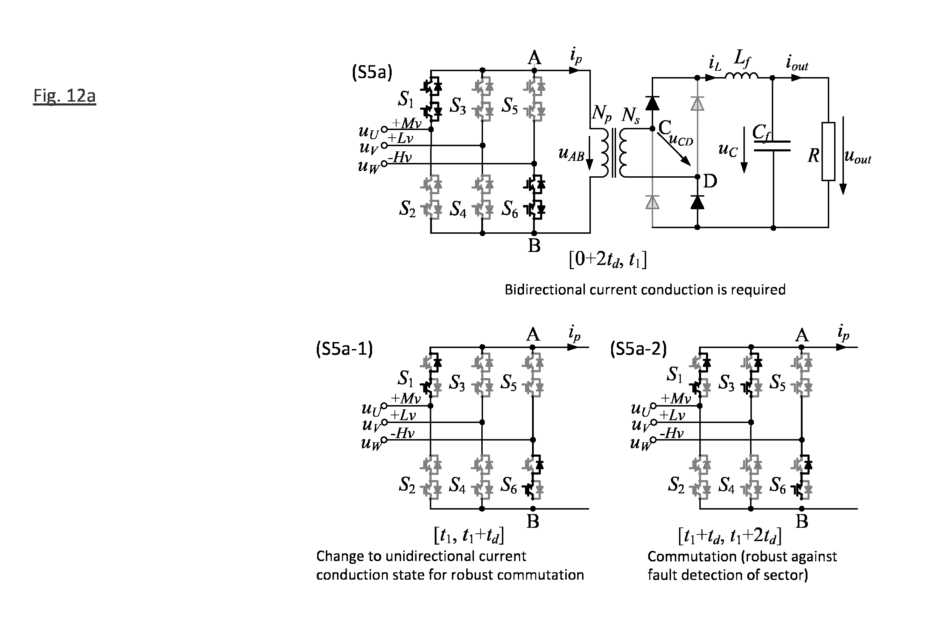

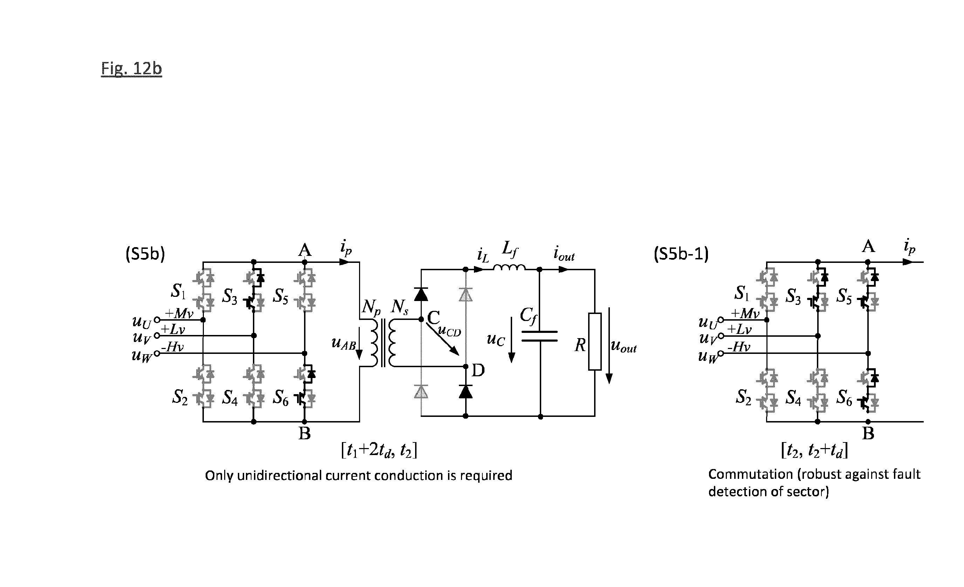

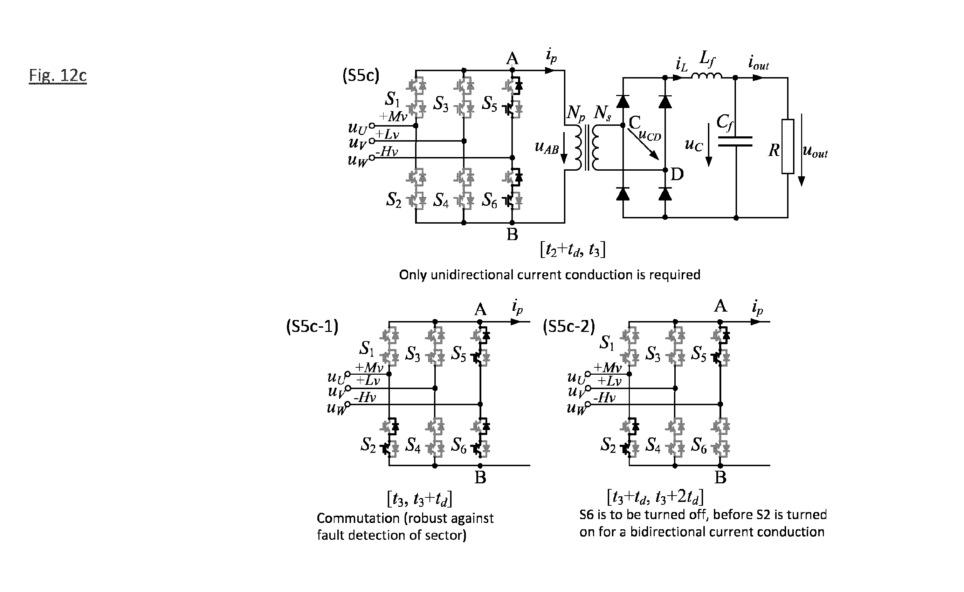

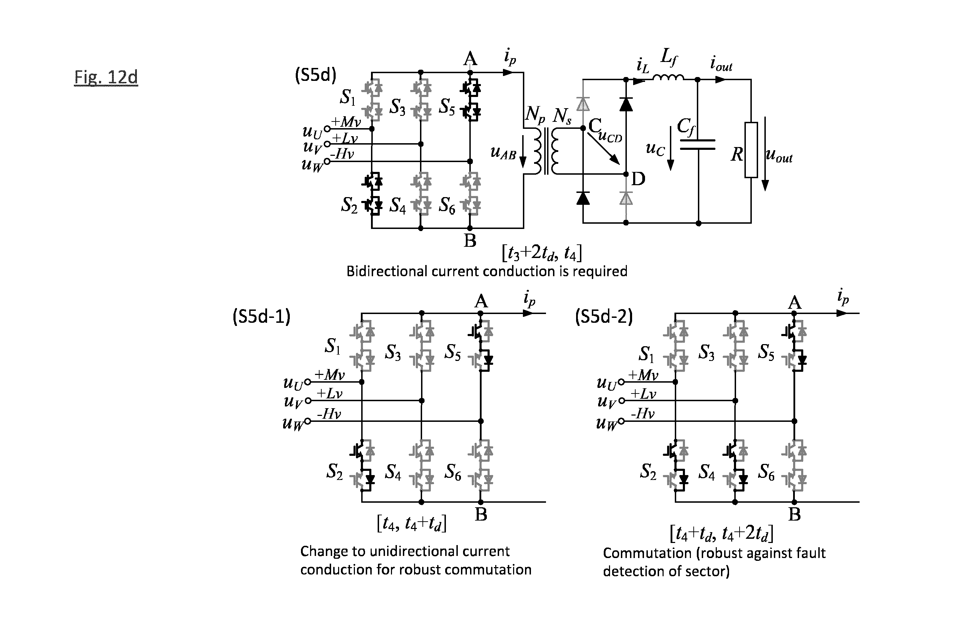

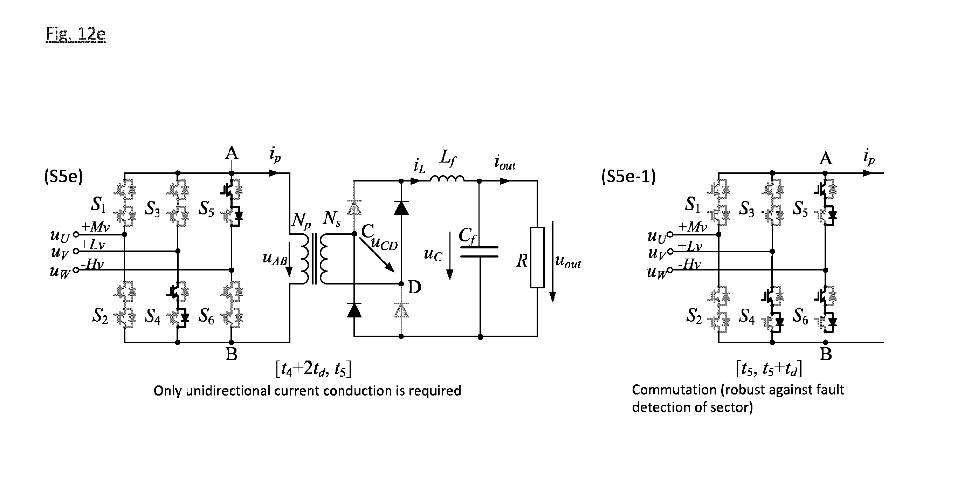

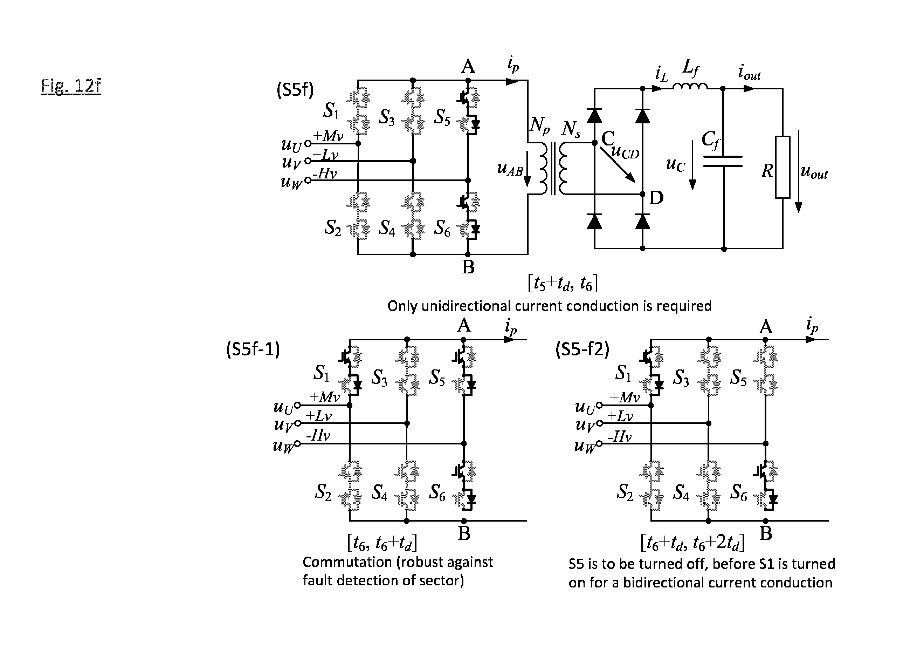

Fig. 12    Schaltzustände bei einem erfindungsgemäßen Betriebsverfahren einer zweiten erfindungsgemäßen Frequenzumformerstufe im Sektor 5,

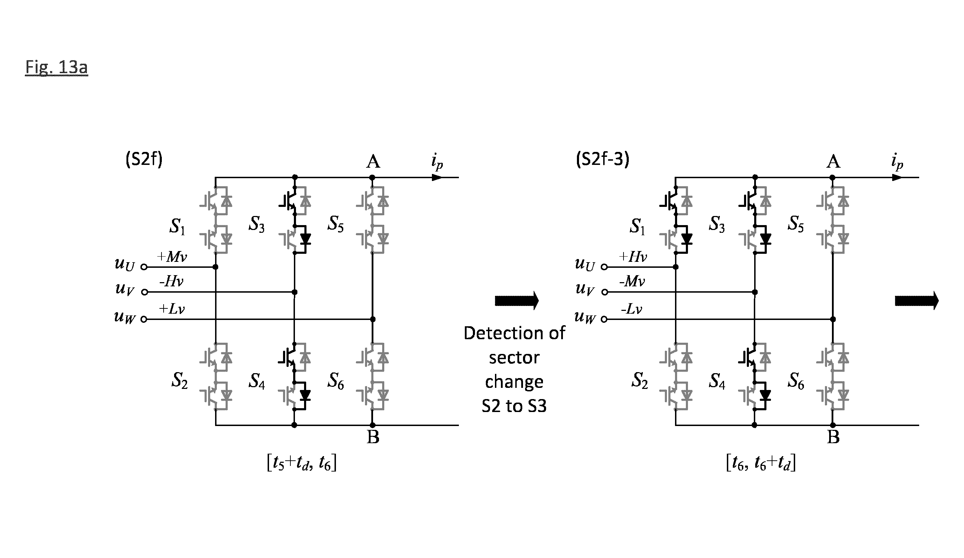

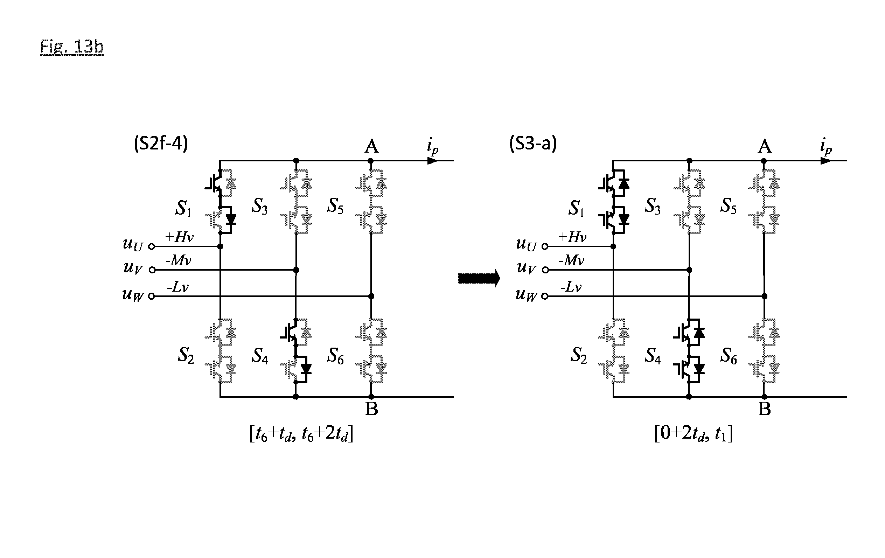

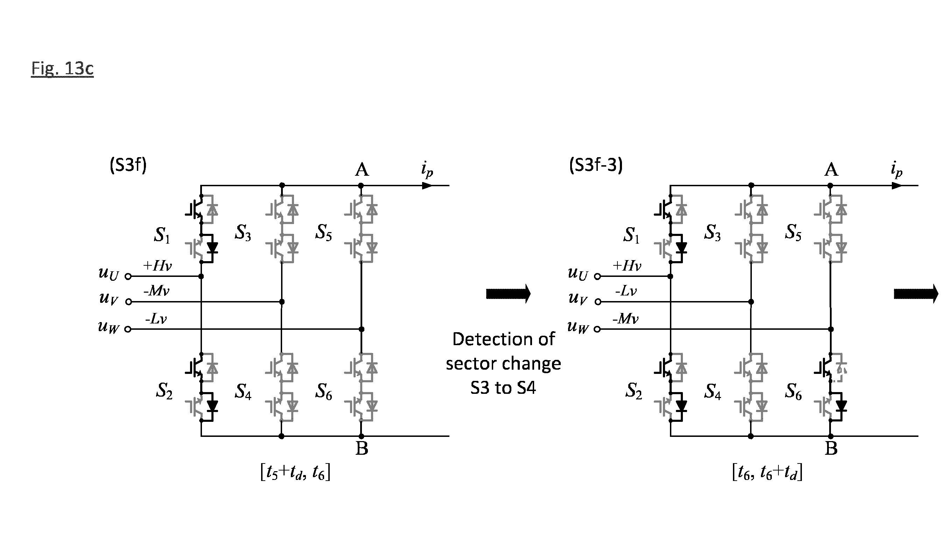

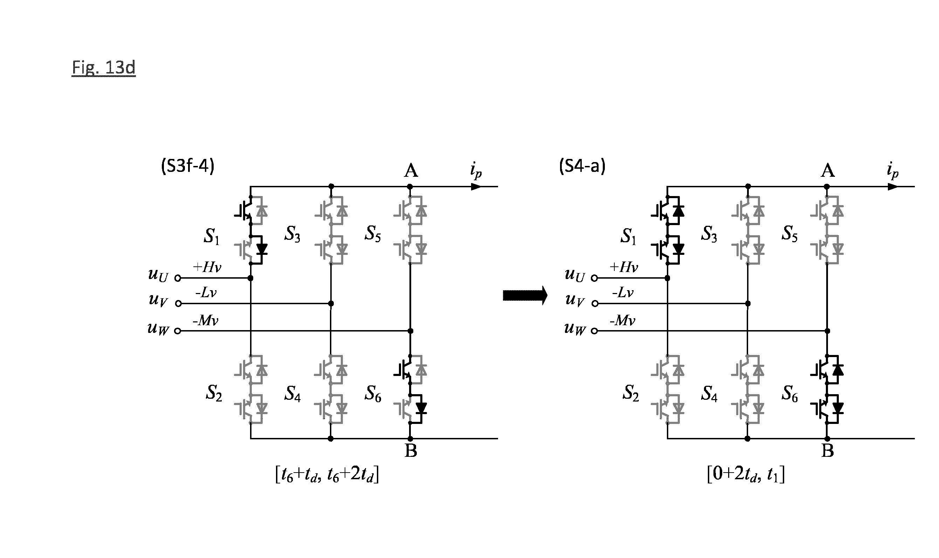

Fig. 13    Schaltzustände bei einem erfindungsgemäßen Betriebsverfahren einer zweiten erfindungsgemäßen Frequenzumformerstufe beim Übergang vom Sektor 2 in den Sektor 3 und vom Sektor 3 in den Sektor 4,

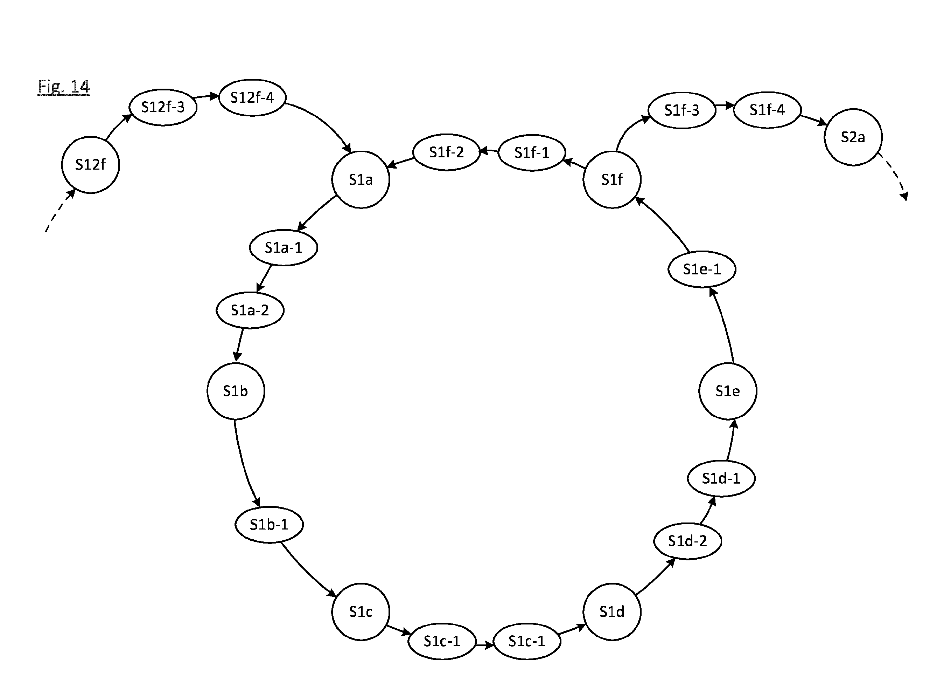

Fig. 14    einen Teil des erfindungsgemäßen Betriebsverfahrens einer zweiten erfindungsgemäßen Frequenzumformerstufe in der Darstellung einer vereinfachten Zustandsmaschine,

Anders als bei einer Kommutierung bei einer Frequenzumformerstufe nach dem Stand der Technik, deren Schaltzustände für die Sektoren 3 und 5 in den Figuren 4 und 6 dargestellt sind, erfolgt die Kommutierung bei der erfindungsgemäßen Frequenzumformerstufe, die sich von der Frequenzumformerstufe des mehrstufigen Gleichrichters aus Fig. 1 im Wesentlichen dadurch unterscheidet, dass sie quasi "snuberless" ist und die Steuerung für das erfindungsgemäße Betriebsverfahren eingerichtet ist.

In den Hauptschaltzuständen S3a, S3b, ... , S3f sind die zum Bereitstellen der gewünschten Spannung am Ausgang der Frequenzumrichterstufe notwendigen Stromrichterschaltungen S1 bis S6 im bidirektionalen Betrieb, damit der Durchlassverlust minimiert wird. Es ist jeweils eine erste Stromrichterschaltung S1, S3, S5 und eine zweite Stromrichterschaltung S2, S4, S6 durchgeschaltet. Bei einer Kommutierung wird entweder von einer stromabgebenden ersten Stromrichterschaltung zu einer stromübernehmenden ersten Stromrichterschaltung ein Strom übergeben oder von einer stromabgebenden zweiten Stromrichterschaltung zu einer stromübernehmenden zweiten Stromrichterschaltung ein Strom übergeben. Die Kommutierung wird anhand der Kommutierung von der Stromrichterschaltung S4 zur Stromrichterschaltung S6, d.h. vom Hauptschaltzustand S3a zum Hauptschaltzustand S3b erläutert. Die Kommutierung zwischen den übrigen Hauptschaltzuständen erfolgt analog und ist dem Fachmann aus der Fig. 7 ohne weiteres ersichtlich.

Im Hauptschaltzustand S3a ist eine erste Stromrichterschaltung, nämlich die erste Stromrichterschaltung S1 im bidirektionalen Betrieb. Außerdem ist die zweite Stromrichterschaltung S4 im bidirektionalen Betrieb.

Mit dem Zeitpunkt t1 beginnt die Kommutierung von der Stromrichterschaltung S4 auf die Stromrichterschaltung S6. Dazu wird in einem ersten Schritt in dem Übergangsschaltzustand S3a-1 zunächst die Stromrichterschaltung S4 in einen unidirektionalen Betrieb überführt, und zwar so, dass der im gerade verlassenen Hauptschaltzustand S3a fließende Strom zunächst weiter fließen kann.

Dann wird im zweiten Schritt (Übergangsschaltzustand S3a-2) im Zeitpunkt t1+td1 die stromübernehmende Stromrichterschaltung S6 ebenfalls unidirektional eingeschaltet. In diesem bis zum Zeitpunkt t1+td2 andauernden Zeitpunkt sind sowohl die zweite Stromrichterschaltung S4 als auch die zweite Stromrichterschaltung S6 unidirektional durchgeschaltet und zwar so, dass auf einem Weg von dem mit der Stromrichterschaltung S4 verbundenen Außenleiteranschluss uV über die Stromrichterschaltung S4, dem Anschluss B der Brückenschaltung, die Stromrichterschaltung S6 zum Außenleiteranschluss uW Body-Dioden der nicht leitenden MOS-FETs der Stromrichterschaltungen S4 und S6 antiseriellen geschaltet sind. Dadurch ist es verhindert, dass die beiden Außenleiteranschlüsse uV und uW kurzgeschlossen sind. Gleichzeitig kann jedoch weiterhin von dem Anschluss B über die Stromrichterschaltung S4 ein Strom zum Außenleiteranschluss uV fließen, wie auch vom Anschluss B über die Stromrichterschaltung S6 ein Strom zum Außenleiteranschluss uW fließen kann, wodurch die Stromübernahme durch die Stromrichterschaltung S6 beginnt.

Im dritten Schritt (Übergangsschaltzustand S3a-3) wird dann die Stromrichterschaltung S4 vollständig abgeschaltet, so dass der Stromfluss durch die Stromrichterschaltung S4 vollständig unterbleibt und der Strom vollständig von der Stromrichterschaltung S6 übernommen wird. Dieser dritte Schritt ist zum Zeitpunkt t1+td3 abgeschlossen und die dann stromführenden Stromrichterschaltungen S1 und S6 können beim Wechsel in den Hauptschaltzustand S3b bidirektional eingeschaltet werden, so dass im im Vergleich zu den Übergangszuständen lange andauernden Hauptschaltzustand kein Strom über die Body-Diode, auch als Inversdiode bezeichnet, fließen muss.

Die weiteren Kommutierungen im Sektor 3 erfolgen mit den gleichen drei Schritten und auch im Sektor 5 erfolgt die Kommutierung auf diese Art und Weise, was in der Fig. 10 dargestellt ist.

Schließlich wird auch bei einem Wechsel von einem Sektor zum nächsten eine Kommutierung in drei Schritten durchlaufen, wobei jedes Mal die im Hauptschaltzustand vor der Kommutierung bidirektional leitenden und stromabgebende Stromrichterschaltung im ersten Schritt (Übergangsschaltzustände S2f-1, S3f-1) in einen unidirektionalen Schaltzustand versetzt wird, dann im zweiten Schritt (Übergangsschaltzustände S2f-4, S3f-4) die stromübernehmende Stromrichterschaltung unidirektional dazugeschaltet wird. Im dritten Schritt (Übergangsschaltzustände S2f-5, S3f-5)wird dann die stromabgebende Stromrichterschaltung ausgeschaltet. Im folgenden Hauptschaltzustand S3a, S4a des nun erreichten Sektors werden dann die stromführenden Stromrichterschaltungen bidirektional geschaltet.

Die Abfolge der Schaltzustände beim Verlassen des Sektors 12 und beim Eintritt in den Sektor 1, beim in der Regel mehrfachen Durchlaufen des Sektors 1 mit den Hauptsschaltzuständen S1 a, S1 b, S1c, S1d, S1e, S1f und beim Verlassen des Sektors 1 zum Sektor 2 ist in Fig. 10 dargestellt.

Eine Frequenzumrichterstufe mit einer Brückenschaltung, deren Stromrichterschaltungen S1 bis S6 aus antiseriellen IGBT mit Freilaufdioden aufgebaut sind, kann ebenso erfindungsgemäß betrieben werden.

Bei einer Frequenzumrichterstufe mit IGBT als Stromrichterventilen, aus denen die Stromrichterschaltungen S1 bis S6 aufgebaut sind, ist es aufgrund der Eigenschaften der Freilaufdiode möglich, auch in einem Hauptschaltzustand den Strom über die Freilaufdiode eines gesperrten IGBTs einer stromführenden Stromrichterschaltung S1 bis S6 zu leiten. Anders als bei einer Frequenzumrichterstufe mit MOS-FETs müssen in den Hauptschaltzuständen daher die stromführenden Stromrichterschaltungen nicht bidirektional geschaltet sein. Es ist daher nicht notwendig gegenüber dem im dritten Schritt der Kommutierung eingenommenen Schaltzustand etwas zu verändern. Dieser im dritten Schritt erreichte Schaltzustand kann als Hauptschaltzustand beibehalten werden. Bei der dann folgenden Kommutierung kann dann der erste Kommutierungsschritt, nämlich der Wechsel der stromführenden Stromrichterschaltungen in den unidirektionalen Zustand entfallen, da die Stromrichterschaltungen in dem unidirektionalen Zustand geblieben sind. Dadurch lässt sich die Kommutierung stark vereinfachen. Das ist für eine Frequenzumrichterstufe mit IGBT in der Fig. 11 für die Hauptschaltzustände S3b, S3c, S3e und S3f und in der Fig. 12 für die Hauptschaltzustände S5b, S5c, S5e, S5f dargestellt.

Diese Vereinfachung ist aber nur in Verbindung mit den Hauptschaltzuständen möglich, in denen der Strom, der über die Frequenzumrichterstufe geführt wird, keinen Richtungswechsel erfährt, d.h. keinen Nulldurchgang erfährt. Erfährt dagegen der Strom durch die Frequenzumrichterstufe iP einen Nulldurchgang, was in den Hauptschaltzuständen (Fig. 11) S3a und S3d bzw. für den Sektor 5 in den Hauptschaltzuständen S5a und S5d der Fall ist, wie man aus den Fig. 3c und 5c ableiten kann, müssen die stromführenden Stromrichterschaltungen bidirektional betrieben werden, um die Änderung der Richtung des Stroms iP zu ermöglichen.

Sektorenwechsel erfolgen bei einer Frequenzumrichterstufe mit IGBTs auf die gleiche Art und Weise wie bei der Frequenzumrichterstufe mit MOS-FETs, was aus Fig. 13 ohne weiteres erkennbar ist.

Das anhand der vereinfachten Zustandsmaschine in Fig. 14 dargestellte Betriebsverfahren der Frequenzumrichterstufe mit IGBTs zeigt im Vergleich zu Fig. 10 deutlich, wie sich das Betriebsverfahren der Frequenzumrichterstufe mit IGBTs gegenüber dem das Betriebsverfahren der Frequenzumrichterstufe mit MOS-FETs vereinfachen kann.

**Patentansprüche**

1. Frequenzumrichterstufe (S1, S2, S3, S4, S5, S6) zum Transportieren elektrischer Energie von einer n-Phasenwechselstromseite zu einer Einphasenwechselstromseite bei einer Erhöhung der Frequenz der die Energie transportierenden Ströme

    - mit n-Außenleiteranschlüssen (uU, uV, uW) auf der n-Phasenwechselstromseite und mit einem ersten Anschluss (A) und einem zweiten Anschluss (B) der Einphasenwechselstromseite, mit einer Brückenschaltung mit n Zweigen (1, 2, 3) und mit einer Steuerung,
    - wobei jeder Zweig eine erste Stromrichterschaltung (S1, S3, S5) und eine zweite Stromrichterschaltung (S2, S4, S6) aufweist, wobei jede Stromrichterschaltung einen ersten Anschluss und einen zweiten Anschluss aufweist,
    - wobei in jedem Zweig (1, 2, 3) der zweite Anschluss der ersten Stromrichterschaltung und der erste Anschluss der zweiten Stromrichterschaltung in einem Mittelpunkt des Zweigs miteinander verbunden sind,
    - wobei jeder Mittelpunkt eines Zweigs (1, 2, 3) der Brückenschaltung mit genau einem Außenleiteranschluss (uU, uV, uW) der n-Phasenwechselstromseite verbunden ist und umgekehrt,
    - wobei die ersten Anschlüsse der ersten Stromrichterschaltungen (S1, S3, S5) der Zweige (1, 2, 3) mit dem ersten Anschluss (A) der Einphasenwechselstromseite verbunden sind,
    - wobei die zweiten Anschlüsse der zweiten Stromrichterschaltungen (S2, S4, S6) der Zweige (1, 2, 3) mit dem zweiten Anschluss (B) der Einphasenwechselstromseite verbunden sind und
    - wobei jede Stromrichterschaltung (S1, S2, S3, S4, S5, S6) eine antiserielle Schaltung von Stromrichterventilen aufweist, und die Stromrichterventile eine in Rückwärtsrichtung leitende Diode aufweisen oder eine in Rückwärtsrichtung der Stromrichterventile leitende Freilaufdiode parallel zu jedem Stromrichterventil geschaltet ist,
    - wobei die Steuerung im Betrieb der Frequenzumrichterstufe die Stromrichterventile so ansteuert, dass Strom zwischen den ersten Stromrichterschaltungen (S1, S3, S5) und Strom zwischen den zweiten Stromrichterschaltungen (S2, S4, S6) kommutiert,
    **dadurch gekennzeichnet,**
    - **dass** die Steuerung im Betrieb der Frequenzumrichterstufe zumindest während der Kommutierung des Stroms zwischen den Stromrichterschaltungen (S1, S2, S3, S4, S5, S6) jede stromabgebende und jede stromübernehmende Stromrichterschaltung (S1, S2, S3, S4, S5, S6) zum unidirektionalen Betrieb ansteuert, wobei unidirektional bedeutet, dass nur eines der Stromrichterventile der Stromrichterschaltung leitet, während das andere Stromrichterventil sperrt.

2. Frequenzumrichterstufe nach Anspruch 1, **dadurch gekennzeichnet, dass** die Stromrichterventile MOS-Feldeffekttransistoren sind.

3. Frequenzumrichterstufe nach Anspruch 1, **dadurch gekennzeichnet, dass** die Stromrichterventile IGBTs sind.

4. Mehrstufiger Gleichrichter mit einem n-Phasenanschluss, einer mit dem n-Phasenanschluss verbundenen Frequenzumrichterstufe, einer mit der Frequenzumrichterstufe verbundenen Transformatorstufe, einer mit der Transformatorstufe verbundenen Gleichrichterstufe und einem mit der Gleichrichterstufe verbundenen Gleichstromanschluss, **dadurch gekennzeichnet, dass** die Frequenzumrichterstufe eine Frequenzumrichterstufe nach einem der Ansprüche 1 bis 3 ist.

5. Verfahren zum Betreiben einer Frequenzumrichterstufe zum Transportieren elektrischer Energie von einer n-Phasenwechselstromseite zu einer Einphasenwechselstromseite bei einer Erhöhung der Frequenz der die Energie transportierenden Ströme, wobei die Frequenzumrichterstufen nach einem der Ansprüche 1 bis 3 ausgebildet ist, **dadurch gekennzeichnet, dass** bei jeder Kommutierung des Stroms zwischen zwei der genannten Stromrichterschaltungen die stromabgebende und die stromübernehmende Stromrichterschaltung unidirektional betrieben werden.

6. Verfahren nach Anspruch 5, **dadurch gekennzeichnet, dass** bei der Kommutierung zwischen zwei der ersten Stromrichterschaltungen (S1, S3, S5)

   - in einem ersten Schritt die stromabgebende erste Stromrichterschaltung (S1, S3, S5) allein unidirektional betrieben wird,
   - in einem zweiten, an den ersten Schritt anschließenden Schritt die stromabgebende und die stromübernehmende erste Stromrichterschaltung (S1, S3, S5) zusammen unidirektional betrieben werden und
   - in einem dritten, an den zweiten Schritt anschließenden Schritt die stromübernehmende erste Stromrichterschaltung (S1, S3, S5) allein unidirektional betrieben wird.

7. Verfahren nach dem vorhergehenden Anspruch, **dadurch gekennzeichnet, dass** während der Kommutierung zwischen zwei der ersten Stromrichterschaltungen (S1, S3, S5) eine der zweiten Stromrichterschaltungen (S2, S4, S6) unidirektional oder bidirektional betrieben wird.

8. Verfahren nach einem der Ansprüche bis 7, **dadurch gekennzeichnet, dass** bei der Kommutierung zwischen zwei der zweiten Stromrichterschaltungen (S2, S4, S6)

   - in einem ersten Schritt die stromabgebende zweite Stromrichterschaltung (S2, S4, S6) allein unidirektional betrieben wird,
   - in einem zweiten, an den ersten Schritt anschließenden Schritt die stromabgebende und die stromübernehmende zweite Stromrichterschaltung (S2, S4, S6) zusammen unidirektional betrieben werden und
   - in einem dritten, an den zweiten Schritt anschließenden Schritt die zweite stromübernehmende Stromrichterschaltung (S2, S4, S6) allein unidirektional betrieben wird.

9. Verfahren nach dem vorhergehenden Anspruch, **dadurch gekennzeichnet, dass** während der Kommutierung zwischen zwei der zweiten Stromrichterschaltungen (S2, S4, S6) eine der ersten Stromrichterschaltungen (S1, S3, S5) unidirektional oder bidirektional betrieben wird.

10. Verfahren nach einem der Ansprüche 5 bis 9, **dadurch gekennzeichnet, dass** jede der stromführenden Stromrichterschaltungen (S1, S2, S3, S4, S5, S6) zwischen zwei Kommutierungen bidirektional betrieben wird, wobei bidirektional bedeutet , dass beide Stromrichterventile der Stromrichterschaltung (S1, S2, S3, S4, S5, S6) leiten.

11. Verfahren nach einem der Ansprüche 5 bis 9, **dadurch gekennzeichnet, dass** jede der stromführenden Stromrichterschaltungen (S1, S2, S3, S4, S5, S6) zwischen zwei Kommutierungen nur dann bidirektional betrieben wird, wenn zwischen zwei Kommutierungen ein über die Anschlüsse (A, B) der Einphasenwechselstromseite fließender Strom (iP) einen Nulldurchgang hat, während im übrigen nach einer Kommutierung der unidirektionale Betrieb der ersten und der zweiten stromführenden Stromrichterschaltung (S1, S2, S3, S4, S5, S6) aus dem dritten Kommutierungsschritt bis zum zweiten Schritt der nächsten Kommutierung beibehalten wird.

Fig. 1

Fig. 2a

Fig. 2b

EP 2 993 774 A1

Fig. 3a

Sector 2     Sector 3     Sector 4     Sector 5     Sector 6

$u_U$

$u_V$

$u_W$

1                2                3

Fig. 3b

$Hv$

$Mv$

$Lv$

1                2                3

Fig. 3c

$+u_U - u_V$
$Hv + Mv$

$i_p$

$i_L$

$u_{AB}$

$Hv + Lv$
$+u_U - u_W$

$u_{AB,avg}$

$+u_U - u_U$

$+u_U - u_U$

$0$       $t_1$        $t_2$   $t_3$                $t_4$            $t_5$   $t_6$      $t$

$-(Hv + Lv)$
$-u_U + u_W$

$-(Hv + Mv)$
$-u_U + u_V$

$0.5T_s \cdot d \cdot Mv$     $0.5T_s \cdot d \cdot Lv$

$0.5T_s$

Fig. 4a

(S3a)

$[0+t_d, t_1]$

(S3a-1)

$[t_1, t_1+t_d]$
Very high commutation stresses
due to the opened circuit

(S3b)

$[t_1+t_d, t_2]$

(S3b-1)

$[t_2, t_2+t_d]$
Very high commutation stresses
due to the opened circuit

**Fig. 4b**

(S3c)

$[t_2+t_d, t_3]$

(S3c-1)

$[t_3, t_3+t_d]$
Very high commutation stresses due
to the opened circuit

(S3d)

$[t_3+t_d, t_4]$

(S3d-1)

$[t_4, t_4+t_d]$

Fig. 4c

(S3e)

$i_p$

$i_L$ $L_f$ $i_{out}$

$S_1$ $S_3$ $S_5$

$N_p$ $N_s$ C $u_{CD}$

$u_U$ +Hv
$u_V$ -Mv
$u_W$ -Lv

$u_{AB}$

$u_C$ $C_f$ R $u_{out}$

D

$S_2$ $S_4$ $S_6$

B

$[t_4+t_d, t_5]$

(S3e-1)

$i_p$

A

$S_1$ $S_3$ $S_5$

$u_U$ +Hv
$u_V$ -Mv
$u_W$ -Lv

$S_2$ $S_4$ $S_6$

B

$[t_5, t_5+t_d]$

(S3f)

$i_p$

A

$i_L$ $L_f$ $i_{out}$

$S_1$ $S_3$ $S_5$

$N_p$ $N_s$ C $u_{CD}$

$u_U$ +Hv
$u_V$ Mv
$u_W$ -Lv

$u_{AB}$

$u_C$ $C_f$ R $u_{out}$

D

$S_2$ $S_4$ $S_6$

B

$[t_5+t_d, t_6]$

(S3f-1)

$i_p$

A

$S_1$ $S_3$ $S_5$

$S_2$ $S_4$ $S_6$

B

$[t_6, t_6+t_d]$

Very high commutation stresses due to
the opened circuit

EP 2 993 774 A1

Fig. 5a

Sector 2    Sector 3    Sector 4    Sector 5    Sector 6

$u_U$

$u_V$

$u_W$

1    2    3

Fig. 5b

$Hv$

$Mv$

$Lv$

1    2    3

Fig. 5c

$-u_W + u_U$
$Hv + Mv$

$i_p$

$Hv + Lv$

$i_L$

$u_{AB}$

$u_{AB,avg}$    $-u_W + u_V$

$-u_W + u_W$

$-u_W + u_W$

0    $t_1$    $t_2$    $t_3$    $t_4$    $t_5$    $t_6$    $t$

$0.5T_s \cdot d \cdot Mv$    $0.5T_s \cdot d \cdot Lv$

$-(Hv + Lv)$
$+u_W - u_V$

$-(Hv + Mv)$
$+u_W - u_U$

$0.5T_s$

Fig. 6a

Fig. 6b

(S5c)

$u_U \, \begin{matrix} +Mv \\ +Lv \\ Hv \end{matrix}$

$S_1$ $S_3$ $S_5$

$S_2$ $S_4$ $S_6$

A

B

$i_p$

$u_{AB}$

$N_p$ $N_s$

C $u_{CD}$

D

$i_L$ $L_f$ $i_{out}$

$u_C$ $C_f$ R $u_{out}$

$[t_2+t_d,\ t_3]$

(S5c-1)

$u_U \, \begin{matrix} +Mv \\ +Lv \\ -Hv \end{matrix}$

$S_1$ $S_3$ $S_5$

$S_2$ $S_4$ $S_6$

A

B

$i_p$

$[t_3,\ t_3+t_d]$
Very high commutation stresses due
to the opened circuit

(S5d)

$u_U \, \begin{matrix} +Mv \\ +Lv \\ Hv \end{matrix}$

$S_1$ $S_3$ $S_5$

$S_2$ $S_4$ $S_6$

A

B

$i_p$

$u_{AB}$

$N_p$ $N_s$

C $u_{CD}$

D

$i_L$ $L_f$ $i_{out}$

$u_C$ $C_f$ R $u_{out}$

$[t_3+t_d,\ t_4]$

(S5d-1)

$u_U \, \begin{matrix} +Mv \\ +Lv \\ -Hv \end{matrix}$

$S_1$ $S_3$ $S_5$

$S_2$ $S_4$ $S_6$

A

B

$i_p$

$[t_4,\ t_4+t_d]$

Fig. 6c

(S5e)

$S_1$ $S_3$ $S_5$

A $i_p$

$i_L$ $L_f$ $i_{out}$

$u_U$ $+Mv$
$u_V$ $+Lv$
$u_W$ $-Hv$

$N_p$ $N_s$

$u_{AB}$

C $u_{CD}$

$u_C$ $C_f$ $R$ $u_{out}$

D

$S_2$ $S_4$ $S_6$

B

$[t_4+t_d, t_5]$

(S5e-1)

$S_1$ $S_3$ $S_5$

A $i_p$

$u_U$ $+Mv$
$u_V$ $+Lv$
$u_W$ $-Hv$

$S_2$ $S_4$ $S_6$

B

$[t_5, t_5+t_d]$

(S5f)

$S_1$ $S_3$ $S_5$

A $i_p$

$i_L$ $L_f$ $i_{out}$

$u_U$ $+Mv$
$u_V$ $+Lv$
$u_W$ $-Hv$

$N_p$ $N_s$

$u_{AB}$

C $u_{CD}$

$u_C$ $C_f$ $R$ $u_{out}$

D

$S_2$ $S_4$ $S_6$

B

$[t_5+t_d, t_6]$

(S5f-1)

$S_1$ $S_3$ $S_5$

A $i_p$

$+Mv$
$+Lv$
$-Hv$

$S_2$ $S_4$ $S_6$

B

$[t_6, t_6+t_d]$

Very high commutation stresses due to the opened circuit

EP 2 993 774 A1

Fig. 7a

(S3a)

$i_p$

A

$S_1$ $S_3$ $S_5$

$u_U$ +Hv
$u_V$ -Mv
$u_W$ -Lv

$u_{AB}$

$N_p$ $N_s$

C

$u_{CD}$

D

$i_L$ $L_f$ $i_{out}$

$u_C$ $C_f$ R $u_{out}$

$S_2$ $S_4$ $S_6$

B

$[0+t_{d3}, t_1]$

(S3a-1)

$i_p$

A

$S_1$ $S_3$ $S_5$

$u_U$ +Hv
$u_V$ -Mv
$u_W$ -Lv

$S_2$ $S_4$ $S_6$

B

$[t_1, t_1+t_{d1}]$

(S3a-2)

$i_p$

A

$S_1$ $S_3$ $S_5$

$u_U$ +Hv
$u_V$ -Mv
$u_W$ -Lv

$S_2$ $S_4$ $S_6$

B

$[t_1+t_{d1}, t_1+t_{d2}]$

(S3a-3)

$i_p$

A

$S_1$ $S_3$ $S_5$

$u_U$ +Hv
$u_V$ -Mv
$u_W$ -Lv

$S_2$ $S_4$ $S_6$

$[t_1+t_{d2}, t_1+t_{d3}]$

EP 2 993 774 A1

Fig. 7b

(S3b) ... (S3b-1) ... (S3b-2) ... (S3b-3)

Fig. 7c

Fig. 7d

(S3e)

(S3d-1)

$[t_3+t_{d3}, t_4]$

$[t_4, t_4+t_{d1}]$

(S3d-2)

(S3d-3)

$[t_4+t_{d1}, t_4+t_{d2}]$

$[t_4+t_{d2}, t_4+t_{d3}]$

Fig. 7e

(S3f)

$[t_4+t_{d3}, t_5]$

(S3e-1)

$[t_5, t_5+t_{d1}]$

(S3e-2)

$[t_5+t_{d1}, t_5+t_{d2}]$

(S3e-3)

$[t_5+t_{d2}, t_5+t_{d3}]$

Fig. 7f

Fig. 8a

(S5a)

$[0+t_{d3}, t_1]$

(S5a-1)

$[t_1, t_1+t_{d1}]$

(S5a-2)

$[t_1+t_{d1}, t_1+t_{d2}]$

(S5a-3)

$[t_1+t_{d2}, t_1+t_{d3}]$

Fig. 8b

(S5c)

$i_p$

A

$S_1$   $S_3$   $S_5$

$+Mv$
$u_U$   $+Lv$
$u_V$   $-Hv$
$u_W$

$N_p$   $N_s$

$u_{AB}$

$C$   $u_{CD}$

$i_L$   $L_f$   $i_{out}$

$u_C$   $C_f$   $R$   $u_{out}$

D

$S_2$   $S_4$   $S_6$

B

$[t_2+t_{d3},\ t_3]$

$i_L$

(S5c-1)

A   $i_p$

$S_1$   $S_3$   $S_5$

$+Mv$
$u_U$   $+Lv$
$u_V$   $-Hv$
$u_W$

$S_2$   $S_4$   $S_6$

B

$[t_3,\ t_3+t_{d1}]$

(S5c-2)

A   $i_p$

$S_1$   $S_3$   $S_5$

$+Mv$
$u_U$   $+Lv$
$u_V$   $-Hv$
$u_W$

$S_2$   $S_4$   $S_6$

B

$[t_3+t_{d1},\ t_3+t_{d2}]$

(S5c-3)

A   $i_p$

$S_1$   $S_3$   $S_5$

$+Mv$
$u_U$   $+Lv$
$u_V$   $-Hv$
$u_W$

$S_2$   $S_4$   $S_6$

B

$[t_3+t_{d2},\ t_3+t_{d3}]$

Fig. 8d

(S5e)

$i_p$

$S_1$  $S_3$  $S_5$  A

$u_U$ +Mv
$u_V$ +Lv
$u_W$ -Hv

$N_p$  $N_s$

$u_{AB}$

C $u_{CD}$

D

$i_L$  $L_f$  $i_{out}$

$u_C$  $C_f$  R  $u_{out}$

$S_2$  $S_4$  $S_6$

B

$[t_4 + t_{d3}, t_5]$

(S5e-1)

A  $i_p$

$S_1$  $S_3$  $S_5$

$u_U$ +Mv
$u_V$ +Lv
$u_W$ -Hv

$S_2$  $S_4$  $S_6$

B

$[t_5, t_5 + t_{d1}]$

(S5e-2)

A  $i_p$

$S_1$  $S_3$  $S_5$

$u_U$ +Mv
$u_V$ +Lv
$u_W$ -Hv

$S_2$  $S_4$  $S_6$

B

$[t_5 + t_{d1}, t_5 + t_{d2}]$

(S5e-3)

A  $i_p$

$S_1$  $S_3$  $S_5$

$u_U$ +Mv
$u_V$ +Lv
$u_W$ -Hv

$S_2$  $S_4$  $S_6$

B

$[t_5 + t_{d2}, t_5 + t_{d3}]$

EP 2 993 774 A1

Fig. 8f

(S5f) $[t_5+t_{d3}, t_6]$
Anti-series MOSFETs operate as synchronous rectifier

(S5f-1) $[t_6, t_6+t_{d1}]$

(S5f-2) $[t_6+t_{d1}, t_6+t_{d2}]$

(S5f-3) $[t_6+t_{d2}, t_6+t_{d3}]$

Change to unidirectional current conduction state for stressless and robust commutation

Fig. 9a

(S2f-1)

(S2f-4)

(S2f-5)

(S3a)

Detection of sector change S2 to S3

Fig. 9b

(S3f-1)

$u_U$ o—+Hv
$u_V$ o—-Mv
$u_W$ o—-Lv

$S_1$  $S_3$  $S_5$

$S_2$  $S_4$  $S_6$

A  $i_p$

B

$[t_6, t_6+t_{d1}]$

Detection
of sector
change S3
to S4

(S3f-4)

$u_U$ o—+Hv
$u_V$ o—-Lv
$u_W$ o—-Mv

$S_1$  $S_3$  $S_5$

$S_2$  $S_4$  $S_6$

A  $i_p$

B

$[t_6+t_{d1}, t_6+t_{d2}]$

(S3f-5)

$u_U$ o—+Hv
$u_V$ o—-Lv
$u_W$ o—-Mv

$S_1$  $S_3$  $S_5$

$S_2$  $S_4$  $S_6$

A  $i_p$

B

$[t_6+t_{d2}, t_6+t_{d3}]$

(S4a)

$u_U$ o—+Hv
$u_V$ o—-Lv
$u_W$ o—-Mv

$S_1$  $S_3$  $S_5$

$S_2$  $S_4$  $S_6$

A  $i_p$

B

$[0+t_{d3}, t_1]$

EP 2 993 774 A1

Fig. 10

EP 2 993 774 A1

Fig. 11a

(S3a)

$[0{+}2t_d, t_1]$

Bidirectional current conduction is required

(S3a-1)

$[t_1, t_1{+}t_d]$

Change to unidirectional current conduction state for robust commutation

(S3a-2)

$[t_1{+}t_d, t_1{+}2t_d]$

Commutation (robust against fault detection of sector)

Fig. 11b

(S3b)

$i_p$

$S_1$  $S_3$  $S_5$

$u_U$  +Hv
$u_V$  -Mv
$u_W$  -Lv

$u_{AB}$

$N_p$  $N_s$

C  $u_{CD}$

$u_{AB}$

D

$i_L$  $L_f$  $i_{out}$

$u_C$  $C_f$  $R$  $u_{out}$

$S_2$  $S_4$  $S_6$

B

$[t_1+2t_d, t_2]$

Only unidirectional current conduction is required

(S3b-1)

$i_p$

A

$S_1$  $S_3$  $S_5$

$u_U$  +Hv
$u_V$  -Mv
$u_W$  -Lv

$S_2$  $S_4$  $S_6$

B

$[t_2, t_2+t_d]$

Commutation (robust against fault
detection of sector)

EP 2 993 774 A1

Fig. 11c

**Fig. 11d**

(S3d)

$[t_3 + 2t_d,\ t_4]$
Bidirectional current conduction is required

(S3d-1)

$[t_4,\ t_4 + t_d]$
Change to unidirectional current conduction for robust commutation

(S3d-2)

$[t_4 + t_d,\ t_4 + 2t_d]$
Commutation (robust against fault detection of sector)

Fig. 11e

(S3e)

$[t_4+2t_d, t_5]$

Only unidirectional current conduction is required

(S3e-1)

$[t_5, t_5+t_d]$

Commutation (robust against fault detection of sector)

EP 2 993 774 A1

Fig. 11f

(S3f)

Only unidirectional current conduction is required

$[t_5+t_d, t_6]$

(S3f-1)

$[t_6, t_6+t_d]$
Commutation (robust against fault detection of sector)

(S3-f2)

$[t_6+t_d, t_6+2t_d]$
S2 is to be turned off, before S4 is turned on for a bidirectional current conduction

Fig. 12a

Fig. 12b

(S5b)

$S_1$ $S_3$ $S_5$

$u_U$ ○ $+Mv$
$u_V$ ○ $+Lv$
$u_W$ ○ $-Hv$

$S_2$ $S_4$ $S_6$

A $i_p$ B

$N_p$ $N_s$ $u_{AB}$

C $u_{CD}$ D

$i_L$ $L_f$ $i_{out}$

$C_f$ $u_C$ R $u_{out}$

$[t_1+2t_d, t_2]$

Only unidirectional current conduction is required

(S5b-1)

$S_1$ $S_3$ $S_5$

$u_U$ ○ $+Mv$
$u_V$ ○ $+Lv$
$u_W$ ○ $-Hv$

$S_2$ $S_4$ $S_6$

A $i_p$ B

$[t_2, t_2+t_d]$

Commutation (robust against fault detection of sector)

**Fig. 12c**

(S5c)

$[t_2+t_d, t_3]$

Only unidirectional current conduction is required

(S5c-1)

$[t_3, t_3+t_d]$

Commutation (robust against fault detection of sector)

(S5c-2)

$[t_3+t_d, t_3+2t_d]$

S6 is to be turned off, before S2 is turned on for a bidirectional current conduction

Fig. 12d

(S5d)

Bidirectional current conduction is required
$[t_3+2t_d, t_4]$

(S5d-1)
$[t_4, t_4+t_d]$
Change to unidirectional current conduction for robust commutation

(S5d-2)
$[t_4+t_d, t_4+2t_d]$
Commutation (robust against fault detection of sector)

Fig. 12e

(S5e)

$[t_4 + 2t_d, t_5]$
Only unidirectional current conduction is required

(S5e-1)

$[t_5, t_5 + t_d]$
Commutation (robust against fault detection of sector)

EP 2 993 774 A1

Fig. 12f

(S5f)

$i_p$

$u_U$ +Mv
$u_V$ +Lv
$u_W$ -Hv

$S_1$ $S_3$ $S_5$ A
$S_2$ $S_4$ $S_6$ B

$u_{AB}$

$N_p$ $N_s$

$i_p$ $L_f$ $i_{out}$

$i_L$ C $u_{CD}$ D $C_f$ $u_C$ R $u_{out}$

$[t_5+t_d, t_6]$
Only unidirectional current conduction is required

(S5f-1)

$i_p$

$u_U$ +Mv
$u_V$ +Lv
$u_W$ -Hv

$S_1$ $S_3$ $S_5$ A
$S_2$ $S_4$ $S_6$ B

$[t_6, t_6+t_d]$
Commutation (robust against fault detection of sector)

(S5-f2)

$i_p$

$u_U$ +Mv
$u_V$ +Lv
$u_W$ -Hv

$S_1$ $S_3$ $S_5$ A
$S_2$ $S_4$ $S_6$ B

$[t_6+t_d, t_6+2t_d]$
S5 is to be turned off, before S1 is turned on for a bidirectional current conduction

Fig. 13a

(S2f)

$u_U$ $+Mv$
$u_V$ $-Hv$
$u_W$ $+Lv$

$S_1$  $S_3$  $S_5$
$S_2$  $S_4$  $S_6$

A

$i_p$

B

$[t_5+t_d, t_6]$

Detection of
sector
change
S2 to S3

(S2f-3)

$u_U$ $+Hv$
$u_V$ $-Mv$
$u_W$ $-Lv$

$S_1$  $S_3$  $S_5$
$S_2$  $S_4$  $S_6$

A

$i_p$

B

$[t_6, t_6+t_d]$

EP 2 993 774 A1

49

Fig. 13b

(S2f-4)

$S_1$  $S_3$  $S_5$

$u_U$  +Hv

$u_V$  -Mv

$u_W$  -Lv

$S_2$  $S_4$  $S_6$

A  $i_p$

B

$[t_6+t_d, t_6+2t_d]$

(S3-a)

$S_1$  $S_3$  $S_5$

$u_U$  +Hv

$u_V$  -Mv

$u_W$  -Lv

$S_2$  $S_4$  $S_6$

A  $i_p$

B

$[0+2t_d, t_1]$

EP 2 993 774 A1

Fig. 13c

(S3f)

$A$   $i_p$

$S_1$   $S_3$   $S_5$

$u_U$ o— $+Hv$

$u_V$ o— $-Mv$

$u_W$ o— $-Lv$

$S_2$   $S_4$   $S_6$

B

$[t_5+t_d, t_6]$

Detection of
sector change
S3 to S4

(S3f-3)

$A$   $i_p$

$S_1$   $S_3$   $S_5$

$u_U$ o— $+Hv$

$u_V$ o— $-Lv$

$u_W$ o— $-Mv$

$S_2$   $S_4$   $S_6$

B

$[t_6, t_6+t_d]$

EP 2 993 774 A1

51

Fig. 13d

(S3f-4)

$[t_6+t_d, t_6+2t_d]$

(S4-a)

$[0+2t_d, t_1]$

EP 2 993 774 A1

Fig. 14

EP 2 993 774 A1

Europäisches
Patentamt

European
Patent Office

Office européen
des brevets

# EUROPÄISCHER RECHERCHENBERICHT

Nummer der Anmeldung

EP 14 18 3804

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 755 313 A1 (NISSAN MOTOR [JP]; UNIV NAGAOKA TECHNOLOGY [JP]) 16. Juli 2014 (2014-07-16) | 1-5,10 | INV. H02M5/293 |
| Y | * Abbildungen 1,4,5,9 * * Absätze [0010] - [0017], [0022], [0026] - [0028] * ----- | 6-9,11 | ADD. H02M5/297 H02M1/42 |
| Y | KYUNG MIN SUNG ET AL: "A new control method to reduce input current harmonics in matrix converters", CONFERENCE RECORD OF THE 2002 IEEE INDUSTRY APPLICATIONS CONFERENCE : 37TH IAS ANNUAL MEETING ; 13 - 18 OCTOBER 2002, PITTSBURGH, PENNSYLVANIA, USA; [CONFERENCE RECORD OF THE IEEE INDUSTRY APPLICATIONS CONFERENCE. IAS ANNUAL MEETING], IEEE SERVICE CE, Bd. 1, 13. Oktober 2002 (2002-10-13), Seiten 425-431, XP010610255, DOI: 10.1109/IAS.2002.1044121 ISBN: 978-0-7803-7420-1 * Abbildungen 1,6 * * Section IV * ----- | 6-9,11 | |

RECHERCHIERTE SACHGEBIETE (IPC)

H02M

Der vorliegende Recherchenbericht wurde für alle Patentansprüche erstellt

| Recherchenort | Abschlußdatum der Recherche | Prüfer |
|---|---|---|
| Den Haag | 10. Februar 2015 | Kail, Maximilian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 14 18 3804

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-02-2015

| Im Recherchenbericht angeführtes Patentdokument | Datum der Veröffentlichung | Mitglied(er) der Patentfamilie | Datum der Veröffentlichung |
|---|---|---|---|
| EP 2755313 A1 | 16-07-2014 | CN 103765748 A | 30-04-2014 |
| | | EP 2755313 A1 | 16-07-2014 |
| | | JP 5377603 B2 | 25-12-2013 |
| | | JP 2013055866 A | 21-03-2013 |
| | | KR 20140042916 A | 07-04-2014 |
| | | US 2014226382 A1 | 14-08-2014 |
| | | WO 2013035782 A1 | 14-03-2013 |

EPO FORM P0461

Für nähere Einzelheiten zu diesem Anhang : siehe Amtsblatt des Europäischen Patentamts, Nr.12/82